# EUROPEAN PATENT APPLICATION

(11) **EP 4 564 605 A1**
(43) Date of publication of application: **04.06.2025**
(21) Application number: 24794688.2
(22) Date of filing: 27.09.2024
(51) Int. Cl.: H01Q 7/00, H01Q 1/24, H01Q 1/22, H01Q 9/04, H04M 1/02, H04B 5/72, H04B 5/79

(54) **APPARATUS INCLUDING LOOP ANTENNA**

(30) Priority: 07.10.2023 KR 20230133872; 30.11.2023 KR 20230170367
(71) Applicant: Samsung Electronics Co., Ltd., Suwon-si, Gyeonggi-do 16677 (KR)
(72) Inventor: HWANG, Wongi, Suwon-si, Gyeonggi-do 16677 (KR); CHOI, Sanghoon, Suwon-si, Gyeonggi-do 16677 (KR); KIM, Taegyu, Suwon-si, Gyeonggi-do 16677 (KR); KIM, Dokyun, Suwon-si, Gyeonggi-do 16677 (KR); AHN, Kwangseok, Suwon-si, Gyeonggi-do 16677 (KR); JONG, Jina, Suwon-si, Gyeonggi-do 16677 (KR); CHOI, Taihwan, Suwon-si, Gyeonggi-do 16677 (KR); LIM, Gun, Suwon-si, Gyeonggi-do 16677 (KR); HWANG, Minjoo, Suwon-si, Gyeonggi-do 16677 (KR)
(74) Representative: Appleyard Lees IP LLP
(86) International application number: PCT/KR2024/014753
(87) International publication number: WO 2025/075360

(57) **Abstract**

The disclosure discloses an electronic device including a loop antenna. The electronic device (101) comprises a housing (310) including an exterior side wall of the electronic device and a rear side of the electronic device; a loop antenna disposed in the housing, the loop antenna including a first loop portion (730) and a second loop portion (740); an integrated circuit, IC, disposed in the housing, for driving the loop antenna, and wherein the first loop portion is configured to radiate a signal in a direction through the rear side of the electronic device, and the second loop portion is configured to radiate a signal through the exterior side wall.

## Description

### [Technical Field]

The disclosure relates to a device including a loop antenna.

### [Background Art]

Loop antennas, such as near field communication (NFC) antennas, are generally configured in a planar shape and provide satisfactory performance in only one direction (e.g., rearward of the electronic device).

It is desirable to improve the performance of NFC antennas in other directions.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

There is provided a loop antenna in which the required performance is met in directions other than the rearward direction (e.g., upward of the electronic device). Therefore, this loop antenna structure can provide satisfactory performance in various directions.

According to an embodiment of the disclosure, an electronic device may comprise a housing including a conductive member forming a portion of a first side surface (or, a first lateral surface) of the electronic device. The conductive member may include a first segment and a second segment formed in a first direction and a second direction opposite to each other with respect to the non-conductive segmented portion forming another portion of the first side surface. The electronic device may comprise a printed circuit board disposed in the housing. The electronic device may comprise a support plate disposed adjacent to a rear of the housing and having a loop antenna. The loop antenna may include a first loop portion substantially forming a loop and a second loop portion substantially forming another loop. The second loop portion may include first protruding portions, second protruding portions, and third protruding portions, located outside the first loop portion. The first protruding portion may protrude toward the first segment with respect to the first loop portion and may extend to at least a first end portion of the support plate adjacent to the first segment. The second protruding portion may protrude toward the second segment with respect to the first loop portion and may extend to at least a second end portion of the support plate adjacent to the second segment. The third protruding portion may extend between the first end portion and the second end portion so that the first protruding portion and the second protruding portion are connected through the third protruding portion.

According to an embodiment, an electronic device may comprise a housing including a first conductive member and a second conductive member forming portions of an exterior side wall of the electronic device. The electronic device may comprise a printed circuit board disposed in the housing. The electronic device may comprise a support plate disposed in the housing. The electronic device may comprise a NFC antenna provided on the support plate. The NFC antenna may include a first loop portion and a second loop portion disposed on the support plate. The first loop portion may be configured to radiate a signal in a direction passing through a rear surface of the electronic device, and the second loop portion may be configured to radiate a signal in a direction passing through the exterior side wall between the first conductive member and the second conductive member.

According to an embodiment, an electronic device may comprise a housing including a conductive member. The electronic device may comprise a printed circuit board disposed in the housing. The electronic device may comprise a support plate disposed in the housing and having a loop antenna. The loop antenna may include a plurality of loops connected to each other. The plurality of loops may include at least one first loop disposed inside a first area on a first plane of the support plate. The plurality of loops may include at least one second loop including at least one portion disposed inside the first area and at least one portion disposed outside the first area. The at least one portion disposed outside the first area of the second loop may include a first portion and a second portion extending from the first area toward the conductive member on the first plane of the support plate.

### [Brief Description of Drawings]

The subject-matter of the present disclosure is best understood with reference to the accompanying figures, in which:
FIG. 1 is a block diagram illustrating an electronic device in a network environment according to various embodiments of the disclosure;
FIG. 2 is a front perspective view illustrating an electronic device according to an embodiment of the disclosure;
FIG. 3 is a rear perspective view illustrating the electronic device of FIG. 2;
FIG. 4 is an exploded perspective view illustrating the electronic device of FIG. 2;
FIG. 5A is a view illustrating a related electronic device including an NFC antenna;
FIG. 5B is a side view schematically illustrating the electronic device of FIG. 5A;
FIG. 5C is a rear view schematically illustrating the electronic device of FIG. 5A;
FIG. 6 is a view illustrating an example of positions of an electronic device including an NFC antenna with respect to an NFC reader according to an embodiment of the disclosure;
FIG. 7A is a view illustrating a configuration of an NFC antenna according to an embodiment of the disclosure;
FIG. 7B is a view illustrating the configuration of the NFC antenna of FIG. 7A;
FIG. 8 is a side view schematically illustrating the configuration of the NFC antenna of FIGS. 7A and 7B;
FIG. 9 is a view illustrating an antenna pattern of an NFC antenna of FIGS. 7A, 7B, and 8;
FIG. 10 illustrates magnetic field distribution patterns produced by NFC antennas;
FIG. 11A is a view illustrating a configuration of an NFC antenna according to an embodiment of the disclosure;
FIG. 11B is a view illustrating the configuration of the NFC antenna of FIG. 11A;
FIG. 12 is a side view schematically illustrating the configuration of the NFC antenna of FIGS. 11A and 11B;
FIG. 13 is a view illustrating a configuration of an NFC antenna according to an embodiment of the disclosure;
FIG. 14A is a view illustrating a configuration of an NFC antenna according to an embodiment of the disclosure;
FIG. 14B is a view illustrating the configuration of the NFC antenna of FIG. 14A;
FIG. 15A is a view illustrating a configuration of an NFC antenna according to an embodiment of the disclosure;
FIG. 15B is a view illustrating the configuration of the NFC antenna of FIG. 15A; and
FIG. 16 is a view illustrating a configuration of an NFC antenna including an additional electric component according to an embodiment of the disclosure.

### [Mode for the Invention]

Embodiments of the present invention are now described with reference to the accompanying drawings in such a detailed manner as to be easily practiced by one of ordinary skill in the art. However, the disclosure may be implemented in other various forms and is not limited to the embodiments set forth herein. The same or similar reference numbers may be used to refer to the same or similar elements throughout the specification and the drawings. Further, for clarity and brevity, no description is made of well-known functions and configurations in the drawings and relevant descriptions.

It should be appreciated that the method steps or blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions or steps mentioned in the blocks may occur in different orders. For example, two blocks that are consecutively shown may be performed substantially simultaneously or in a reverse order.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

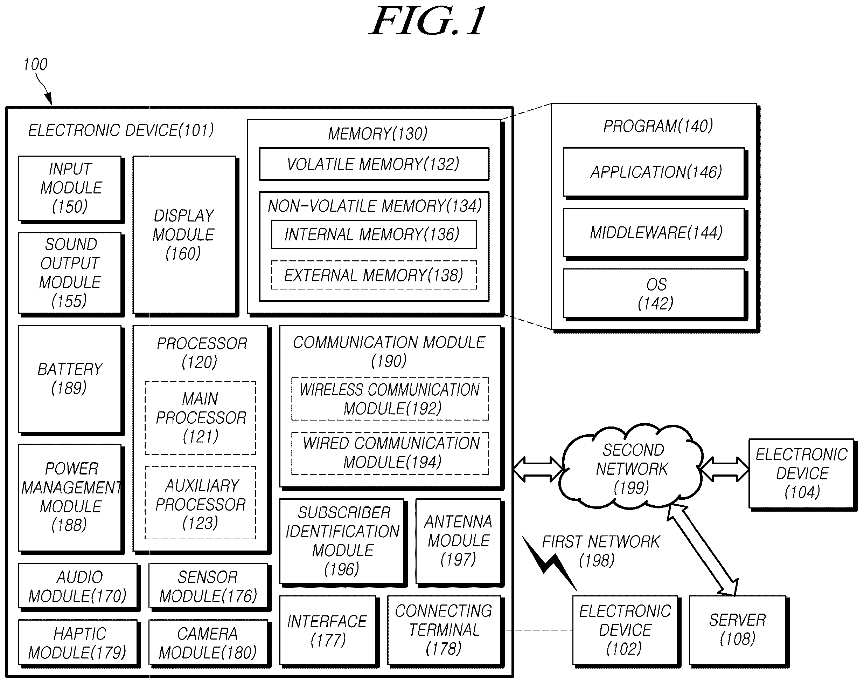

FIG. 1 is a block diagram illustrating an electronic device in a network environment according to various embodiments of the disclosure;

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other components (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a communication module 192 (e.g., a cellular communication module, a short-range communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The communication module 192 may identify or authenticate the electronic device 101 in a communication network, such as the first network 198 or the second network 199, using subscriber information (e.g., international mobile subscriber identity (IMSI)) stored in the subscriber identification module 196.

The communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The communication module 192 may support a high-frequency band (e.g., the mmWave band) to achieve, e.g., a high data transmission rate. The communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The communication module 192 may support various requirements specified in the electronic device 101, an external electronic device (e.g., the electronic device 104), or a network system (e.g., the second network 199). According to an embodiment, the communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface or a lateral surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

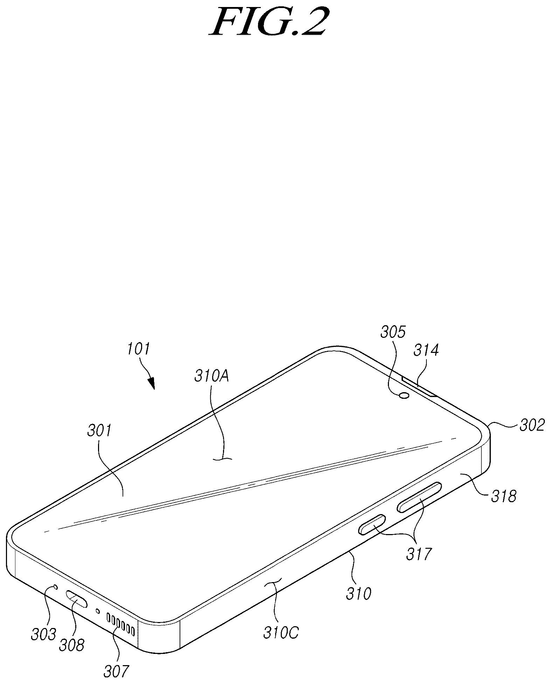

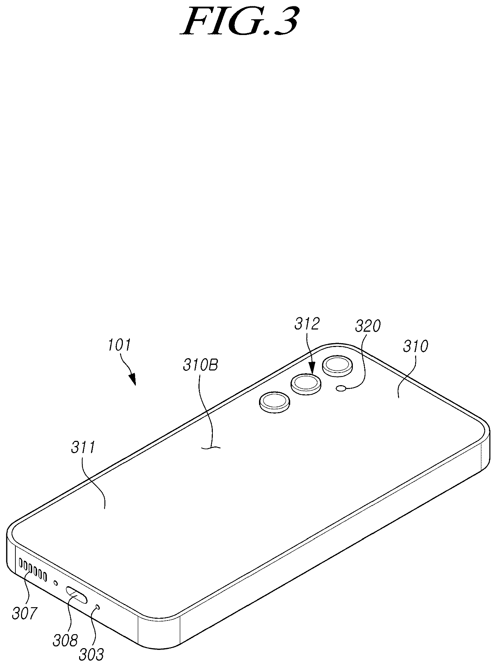

FIG. 2 is a front perspective view illustrating an electronic device according to an embodiment of the disclosure. FIG. 3 is a rear perspective view illustrating the electronic device of FIG. 2.

Referring to FIGS. 2 and 3, according to an embodiment, the electronic device 101 may include a housing 310. According to an embodiment, a housing 310 may have a structure including a front side 310A, a rear side 310B, and a lateral side 310C surrounding a space between the front side 310A and the rear side 310B. According to an embodiment, the housing 310 may have a structure forming part of the front side 310A of FIG. 2, the rear side 310B, and the lateral side 310C of FIG. 3B.

According to an embodiment, at least part of the front side 310A may have a substantially transparent front plate 302 (e.g., a glass plate or polymer plate including various coat layers).

According to an embodiment, the rear side 310B may be formed by a rear plate 311. The rear plate 311 may be formed of, e.g., glass, ceramic, polymer, metal (e.g., aluminum, stainless steel (STS), titanium, or magnesium), or a combination of at least two thereof.

According to an embodiment, the lateral side 310C may be formed by a side bezel structure (or a "side member") 318 that couples to the front plate 302 and/or the rear plate 311 and includes a metal and/or polymer. According to an embodiment, the rear plate 311 and the side bezel plate 318 may be integrally formed together and include the same material (e.g., glass, metal, such as aluminum, STS, or titanium, or ceramic).

According to an embodiment, the electronic device 101 may include at least one of a display 301, audio modules 303, 307, and 314 (e.g., the audio module 170 of FIG. 1), a sensor module (e.g., the sensor module of FIG. 1). 176), camera modules 305 and 312 (e.g., the camera module 180 of FIG. 1), a key input device 317 (e.g., the input module 150 of FIG. 1), and a connector hole 308 (e.g., the connection terminal 178 of FIG. 1). In one or more embodiments, the electronic device 101 may exclude at least one of the components or may add another component.

According to an embodiment, the display 301 may be visually revealed through, e.g., at least a portion of the front plate 302. For example, at least a portion of the display 301 may be exposed through the front plate 302 forming the front side 310A. For example, the edge of the display 301 may be formed to be substantially the same as the adjacent outer-edge shape of the front plate 302. For example, the interval between the outer edge of the display 301 and the outer edge of the front plate 302 may remain substantially even to give a larger area of exposure the display 301.

According to an embodiment, the side (e.g., surface) (or the front plate 302) of the housing 310 may include a screen display area formed as the display 301 is visually exposed. For example, the screen display area may include the front side 310A.

According to an embodiment, the electronic device 101 may include a recess or opening formed in a portion of the screen display area (e.g., the front surface 310A) of the display 301 and may include at least one of an audio module 314, a sensor module, a light emitting device, and a camera module 305 aligned with the recess or opening.

According to an embodiment, the electronic device 101 may include at least one or more of the audio module 314, sensor module 204, camera module 305, fingerprint sensor, and light emitting device on the rear side (e.g., rear surface) of the screen display area of the display 301.

According to an embodiment, the display 301 may be coupled with or disposed adjacent to a touch detection circuit, a pressure sensor capable of measuring the strength (pressure) of touches, and/or a digitizer for detecting a magnetic field-type stylus pen.

According to an embodiment, the first camera module 305 among the camera modules 305 and 312 and/or the sensor module may be disposed in the internal space of the electronic device 101, to abut the external environment through the transmissive area of the display 301. According to an embodiment, the area facing the first camera module 305 of the display 301 may be formed as a transmissive area having a designated transmittance, as a part of the area displaying content. According to an embodiment, the transmissive area may be formed to have a transmittance in a range from about 5% to about 20%. The transmissive area may include an area overlapping an effective area (e.g., an angle-of-view area) of the first camera module 305 through which light incident on the image sensor to generate an image passes. For example, the transmissive area of the display 301 may include an area having a lower pixel density and/or wiring density than the surrounding area. For example, the transmissive area may replace a recess or opening.

According to an embodiment, the audio modules (303, 307, and 314) may include, e.g., a microphone hole 303 and speaker holes (307 and 314). A microphone 303 for obtaining an external sound may be disposed inside the microphone hole. According to an embodiment, a plurality of microphones may be disposed to detect the direction of sound. The speaker holes (307 and 314) may include an external speaker hole 307 and a phone receiver hole 314. In an embodiment, the speaker holes (307 and 314) and the microphone hole 303 may be implemented as a single hole, or speakers may be included without the speaker holes (307 and 314) (e.g., piezo speakers). The audio modules (303, 307, and 314) are not limited to the above-described structure. Depending on the structure of the electronic device 101, various design changes may be made, e.g., only some of the audio modules may be mounted, or a new audio module may be added.

According to an embodiment, for example, the sensor module may generate an electrical signal or data value corresponding to an internal operating state or external environmental state of the electronic device 101. The sensor modules may include a first sensor module (e.g., a proximity sensor) and/or a second sensor module (e.g., a fingerprint sensor) disposed on the front side (e.g., surface) 310A of the housing 310 and/or a third sensor module (e.g., an HRM sensor) and/or a fourth sensor module (e.g., a fingerprint sensor) disposed on the rear side 310B of the housing 310. According to an embodiment, the fingerprint sensor may be disposed on the rear side 310B as well as on the front side 310A (e.g., the display 301) of the housing 310. The electronic device 101 may include a sensor module not shown, e.g., at least one of a gesture sensor, a gyro sensor, a barometric sensor, a magnetic sensor, an acceleration sensor, a grip sensor, a color sensor, an IR sensor, a biometric sensor, a temperature sensor, a humidity sensor, or an illuminance sensor. The sensor modules are not limited to the above-described structure. Depending on the structure of the electronic device 101, various design changes may be made, e.g., only some of the sensor modules may be mounted, or a new sensor module may be added.

According to an embodiment, the camera modules (305 and 312) may include a first camera module 305 disposed on the front side 310A of the electronic device 101, and a rear camera device 312 and/or a flash 319 disposed on the rear side 310B. The camera modules (305 and 312) may include one or more lenses, an image sensor, and/or an image signal processor. The flash 319 may include, e.g., a light emitting diode or a xenon lamp. In an embodiment, two or more lenses (an IR camera, a wide-angle lens, and a telephoto lens) and image sensors may be disposed on one side (e.g., surface) of the electronic device 101. The camera modules (305 and 312) are not limited to the above-described structure. Depending on the structure of the electronic device 101, various design changes may be made, e.g., only some of the camera modules may be mounted, or a new camera module may be added.

According to an embodiment, the electronic device 101 may include a plurality of camera modules (e.g., a dual camera or triple camera) having different attributes (e.g., angle of view) or functions. For example, a plurality of camera modules (305 and 312) including lenses having different angles of view may be configured, and the electronic device 101 may control to change the angle of view of the camera modules (305 and 312) performed by the electronic device 101 based on the user's selection. At least one of the camera modules (305 and 312) may form, for example, a wide-angle camera and at least another of the plurality of camera modules may form a telephoto camera. Similarly, at least one of the camera modules (305 and 312) may form, for example, a front camera and at least another of the plurality of camera modules may form a rear camera. Further, the camera modules (305 and 312) may include at least one of a wide-angle camera, a telephoto camera, and an IR camera (e.g., a time of flight (TOF) camera, a structured light camera). According to an embodiment, the IR camera may be operated as at least a portion of the sensor module. For example, the TOF camera may be operated as at least a portion of a sensor module for detecting a distance to a subject.

According to an embodiment, the key input device 317 may be disposed on the lateral side 310C of the housing 310. In an embodiment, the electronic device 101 may exclude all or some of the above-mentioned key input devices 317 and the excluded key input devices 317 may be implemented in other forms, e.g., as soft keys, on the display 301. According to an embodiment, the key input device may include the sensor module 316 disposed on the second side 310B of the housing 310.

According to an embodiment, the light emitting device may be disposed on, e.g., the front side 310A of the housing 310. The light emitting element may provide, e.g., information about the state of the electronic device 101 in the form of light. In an embodiment, the light emitting device may provide a light source that interacts with, e.g., the front camera module 305. The light emitting element may include, e.g., a LED, an IR LED, and/or a xenon lamp.

According to an embodiment, the connector hole 308 may receive a connector (e.g., a USB connector) for transmitting and receiving power and/or data with an external electronic device.

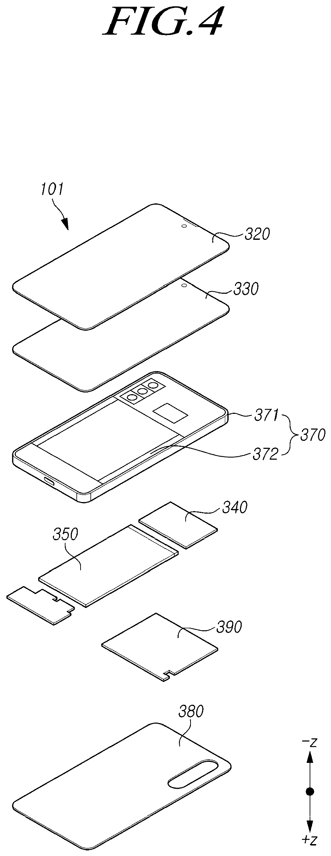

According to an embodiment, the first camera module 305 of the camera modules (305 and 312) and/or some of the sensor modules may be disposed to be exposed to the outside through at least a portion of the display 301. For example, the camera module 305 may include a punch hole camera disposed inside a hole or recess formed in the rear side (e.g., surface) of the display 301. According to an embodiment, the second camera module 312 may be disposed inside the housing 310 so that the lens is exposed to the second side 310B of the electronic device 101. For example, the second camera module 312 may be disposed on a printed circuit board (e.g., the printed circuit board 340 of FIG. 4).

According to an embodiment, the first camera module 305 and/or the sensor module may be disposed to contact the external environment through a transparent area from the internal space of the electronic device 101 to the front plate 302 of the display 301. Further, some sensor module may be disposed to perform its functions without being visually exposed through the front plate 302 in the internal space of the electronic device.

FIG. 4 is an exploded perspective view illustrating the electronic device of FIG. 2.

Referring to FIG. 4, an electronic device 101 (e.g., the electronic device 101 of FIGS. 2 and 3) may include a supporting bracket 370, a front plate 320 (e.g., the front plate 302 of FIG. 2), a display 330 (e.g., the display 301 of FIG. 2), a printed circuit board (PCB) 340 (e.g., a PCB, flexible PCB (FPCB), or rigid flexible PCB (RFPCB)), a battery 350 (e.g., the battery 189 in FIG. 1), a support plate 390 including an antenna (e.g., the antenna module 197 of FIG. 1 and/or the antenna 220 of FIG. 2), and/or a rear plate 380 (e.g., the rear plate 311 of FIG. 2). The supporting bracket 370 of the electronic device 101, according to an embodiment, may include a side bezel structure 371 (e.g., the side bezel structure 318 of FIG. 2) and a first supporting member 372. In the disclosure, the support plate 390 may be referred to as an antenna plate.

According to an embodiment, the electronic device 101 may omit at least one of the components or may add another component. At least one of the components of the electronic device 101 may be the same as or similar to at least one of the components of the electronic device 101 of FIGS. 2 and 3 and no duplicate description is made below.

According to an embodiment, the first supporting member 372 may be disposed inside the electronic device 101 to be connected with the side bezel structure 318 or integrated with the side bezel structure 318. The first supporting member 372 may be formed of, e.g., a metal and/or non-metallic material (e.g., polymer). The display 330 may be joined onto one side (e.g., surface) of the first supporting member 372, and the printed circuit board 340 may be joined onto the opposite side (e.g., surface) of the first supporting member 311.

According to an embodiment, a processor (e.g., the processor 120 of FIG. 1), a memory (e.g., the memory 130 of FIG. 1), and/or an interface (e.g., the interface 177 of FIG. 1) may be mounted on the printed circuit board 340. In the disclosure, the plane containing the printed circuit board 340 may be referred to as a conductive plane or a ground plane.

According to an embodiment, the processor may include one or more of, e.g., a central processing unit, an application processor, a graphic processing device, an image signal processing, a sensor hub processor, or a communication processor.

According to an embodiment, the printed circuit board 340 may include a flexible printed circuit board type radio frequency cable (FRC). For example, the printed circuit board 340 may be disposed on at least a portion of the first supporting member 372 and may be electrically connected with an antenna module (e.g., the antenna module 197 of FIG. 1 and/or the antenna 220 of FIG. 2) and a communication module (e.g., the communication module 190 of FIG. 1 and/or the transceiver 210 of FIG. 2).

According to an embodiment, the memory may include, e.g., a volatile or non-volatile memory.

According to an embodiment, the interface may include, e.g., a HDMI, a USB interface, a SD card interface, and/or an audio interface. The interface may electrically or physically connect, e.g., the electronic device 101 with an external electronic device and may include a USB connector, an SD card/multimedia card (MMC) connector, or an audio connector.

According to an embodiment, the battery 350 may be a device for supplying power to at least one component of the electronic device 101. The battery 189 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 101.

According to an embodiment, the antenna plate 390 may be disposed between the rear plate 380 and the printed circuit board 340 (and/or the battery 350). The antenna plate 390 may include, e.g., a NFC antenna, a wireless charging antenna, and/or a magnetic secure transmission (MST) antenna. At least one antenna included in the antenna plate 390 may perform short-range communication with, e.g., an external device or may wirelessly transmit or receive power necessary for charging. Meanwhile, as described above, the antenna or the antenna structure may be positioned at any other suitable position. For example, one or more antennas may be positioned in a first area (e.g., an upper area) of the electronic device, and one or more antennas may be positioned in a second area (e.g., a lower area) spaced apart from the first area of the device. For example, one or more antennas may be positioned along an edge (e.g., the side member or the side bezel structure 318) of the electronic device. For example, one or more antennas may be positioned in the center of the rear plate 380 or may be positioned at a corner of the electronic device.

As used herein, "loop antennas" are for inductive near-field signals, such as NFC antennas. NFC antennas can generate a magnetic field to transmit a signal and can receive a signal using magnetic induction. In general, inductive near-field signals are directional. Furthermore, the antenna performance of transmitting and receiving such signals is equivalent. That is, higher antenna performance in transmitting a signal implies higher performance receiving a signal and vice versa.

According to an embodiment, the rear plate 380 may form at least a portion of the rear side (e.g., surface) (e.g., the second surface 310B of FIG. 3) of the electronic device 101.

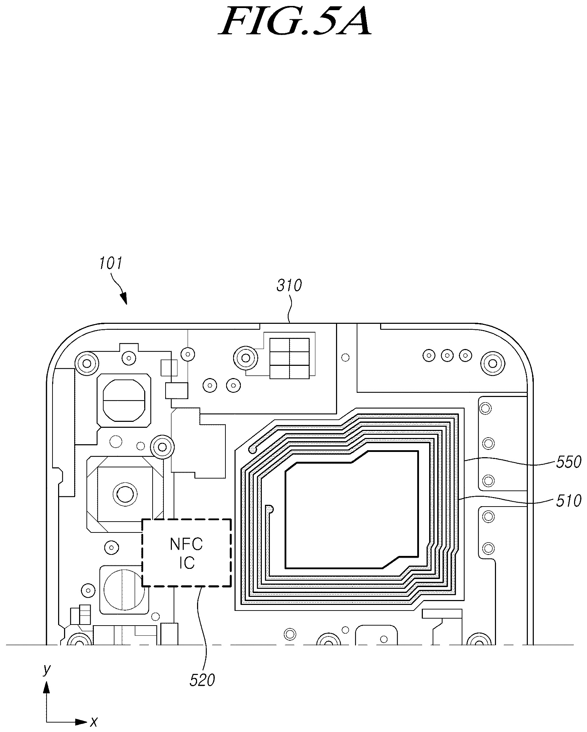

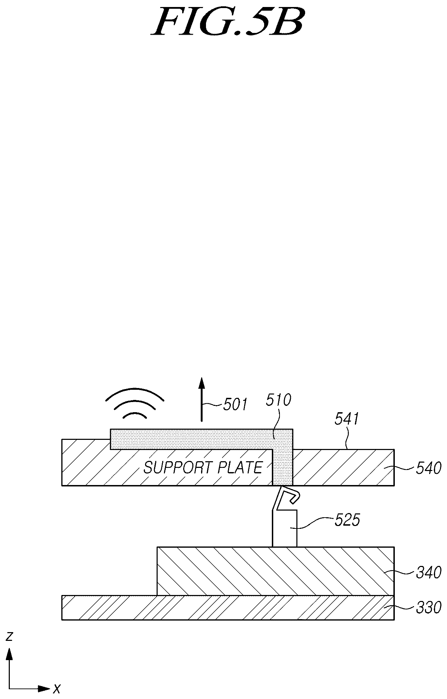

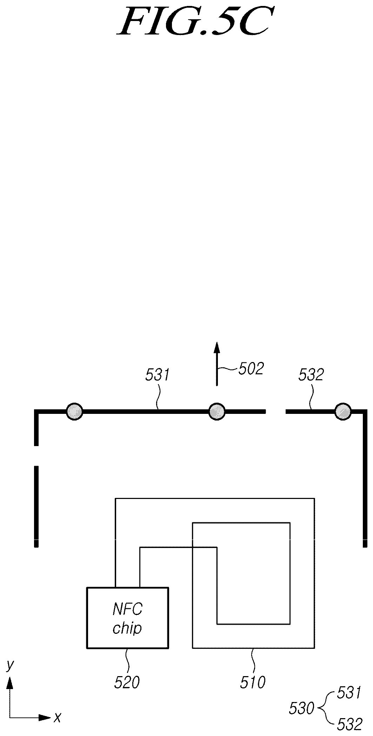

FIG. 5A is a view illustrating a related electronic device including an NFC antenna. FIG. 5B is a side view schematically illustrating the electronic device of FIG. 5A. FIG. 5C is a rear view schematically illustrating the electronic device of FIG. 5A.

FIG. 5A may be a see-through view, e.g., when the electronic device is viewed from the rear side (e.g., surface) (e.g., the rear side 310B of FIG. 3).

Referring to FIG. 5A, the electronic device 101 may include a housing 310, an NFC antenna 510, and an NFC integrated circuit (IC) 520 for driving the NFC antenna 510. Referring to FIG. 5B, the electronic device 101 may include a support plate 540 (e.g., the support plate 390 of FIG. 4), a printed circuit board 340, and/or a display 330.

In the disclosure, the housing 310 may be referred to as a case or a frame. In the disclosure, the NFC IC 520 may be referred to as an NFC chip.

The housing 310 may include a structure (hereinafter, a rear housing structure) forming a rear side (e.g., surface) (e.g., the rear side 310B of FIG. 3) and/or a structure (hereinafter, a side housing structure) forming a lateral side (e.g., surface) (e.g., the lateral side 310C of FIG. 3). The side housing structure (or bezel), e.g., may be formed as an extending portion of the rear housing structure, or may be formed of one or more separated members.

The NFC antenna 510 may be a two-dimensional (2D) flat antenna (e.g., a two-dimensional loop antenna).

The NFC antenna 510 may include a plurality of loops (or loop portions) connected to each other. The loop portion may substantially form a loop. One loop may correspond to one turn.

A plurality of loops (or loop portions) may be arranged in a common rotation orientation. The arrangement of the plurality of loops (or loop portions) may be the same as that illustrated in FIG. 5A but is not limited thereto. For example, a plurality of loops (or loop portions) may be arranged in circular shapes, and may, for example, form a spiral shape.

As illustrated in FIG. 5B, the NFC antenna 510 may be disposed (or provided) on the support plate 540. For example, the NFC antenna 510 may be disposed (or formed) on the first side 541 of the support plate 540. For example, all of the plurality of loops of the NFC antenna 510 may be disposed (or formed) in the first area 550 on the first side 541 of the support plate 540. The first side 541 may be a side (e.g., surface) facing in a direction 501 (rear direction) of a rear side (e.g., surface) (e.g., 310B) of the electronic device 101.

The size of the first area 550 may be associated with the performance (e.g., NFC recognition rate) of the NFC antenna 510 in the rear direction. For example, a larger first area 550 may result in more accurate and/or precise NFC recognition, i.e., an increased NFC recognition rate and increased NFC performance.

As illustrated in FIG. 5B, the NFC antenna 510 may be electrically connected to at least one electric element (e.g., the NFC IC 520 disposed on the printed circuit board 340) on the printed circuit board 340 through a connection member (e.g., a C-Clip) 525. For example, the NFC antenna 510 may contact the connection member 525 through a through-hole in the support plate 390, and the connection member 525 may be electrically connected to the NFC IC 520 (or a line connected to the NFC IC 520) disposed on the printed circuit board 340. Accordingly, the NFC antenna 510 and the NFC IC 520 may be electrically connected, and the NFC IC 520 may drive the NFC antenna 510.

Referring to FIG. 5C, the housing 310 of the electronic device 101 may include a conductive member 530 including a conductive material (e.g., metal, titanium, or another conductive material). For example, the side member (e.g., the side member 318 of FIG. 2) of the housing 310 may include a conductive member 530. In the disclosure, the conductive member 530 may be referred to as a conductive housing member. In the disclosure, the side member including the conductive member 530 may be referred to as a conductive side member. In the disclosure, a frame (or housing) of the electronic device 101 including the conductive member 530 including metal may be referred to as a metal frame.

The electronic device 101 may include one or more antennas (e.g., a metal antenna or a metal frame antenna) including an antenna structure formed by at least a portion of the conductive member 530 (or a conductive side member) of the electronic device 101.

The conductive member 530 (or the conductive side member) may be divided into a plurality of segments (e.g., the first segment 531 and the second segment 532) by at least one segmented portion. The segmented portion is a portion between segments and may be filled with a dielectric. The dielectric may be, e.g., air, plastic, ceramic, glass, or other dielectric. In the disclosure, the segmented portion may be referred to as a gap or a gap portion.

The shape of the segments of the conductive member 530 (or the conductive side member) may be configured to form an antenna having a required or desired antenna performance characteristic.

As illustrated in FIGS. 5A to 5C, since the NFC antenna 510 is disposed (or formed) on the first plane of the support plate 540 facing in the rear direction, when a current source is connected, the NFC antenna 510 may generate a magnetic field in the rear direction 501. Accordingly, the NFC antenna 510 having the structure of FIGS. 5A to 5C may provide satisfactory NFC performance (e.g., NFC recognition rate) in the rear direction 501 of the electronic device 101.

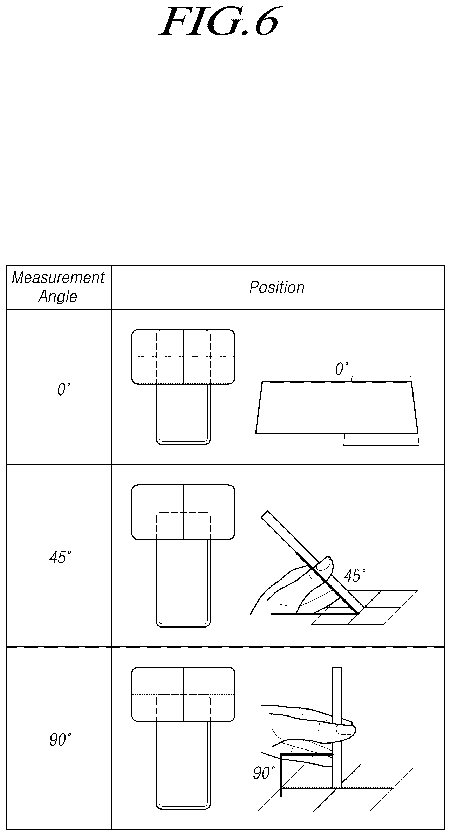

FIG. 6 is a view illustrating an example of positions of an electronic device including an NFC antenna with respect to an NFC reader according to an embodiment of the disclosure. This position may be for NFC tagging.

Referring to FIG. 6, when the measurement angle is 0°, it may be a position (hereinafter, referred to as a first tag position) where the rear side (e.g., surface) of the electronic device is tagged parallel to the NFC reader. When the measurement angle is 45°, it may be a position (hereinafter, a second tag position) where tagging is performed at 45° as the angle formed by the rear side (e.g., surface) of the electronic device and the plane of the NFC reader. When the measurement angle is 90°, it may be a position (hereinafter, a third tag position) where the rear side (e.g., surface) of the electronic device is tagged perpendicular to the plane of the NFC reader. The measurement angle refers to the angle between the rear side (e.g., surface) of the electronic device along the y-axis, and the plane of the NFC reader.

Table 1 is a table evaluating NFC performance according to the tag position of the electronic device.

**[Table 1]**

| | | | |
|---|---|---|---|
| Measurement angle | 0° | 45° | 90° |
| Performance value | 71% | 54% | 19% |

Table 1 shows the performance (e.g., NFC recognition rate) of NFC tagging when the electronic device 101 including the NFC antenna 510 of FIGS. 5A to 5C recognizes a card for each position (e.g., the positions shown in FIG. 6) according to the measurement angle (e.g., 0°, 45°, or 90°) at a distance of at least 45 mm from the NFC reader in a card mode (card reader).

Referring to Table 1, the NFC recognition rate at the position of the measurement angle 0° is 71%, the NFC recognition rate at the position of the measurement angle 45° is 54%, and the NFC recognition rate at the position of the measurement angle 90° is 19%. The NFC recognition rate (i.e., the performance value) is the average number of times that correct NFC recognition occurs per 100 attempts. Referring to Table 1, e.g., it may be identified that the electronic device 101 having the same structure as the NFC antenna 510 of FIGS. 5A to 5C shows satisfactory performance only at a measurement angle of 0° but does not show satisfactory performance at a measurement angle of 90°.

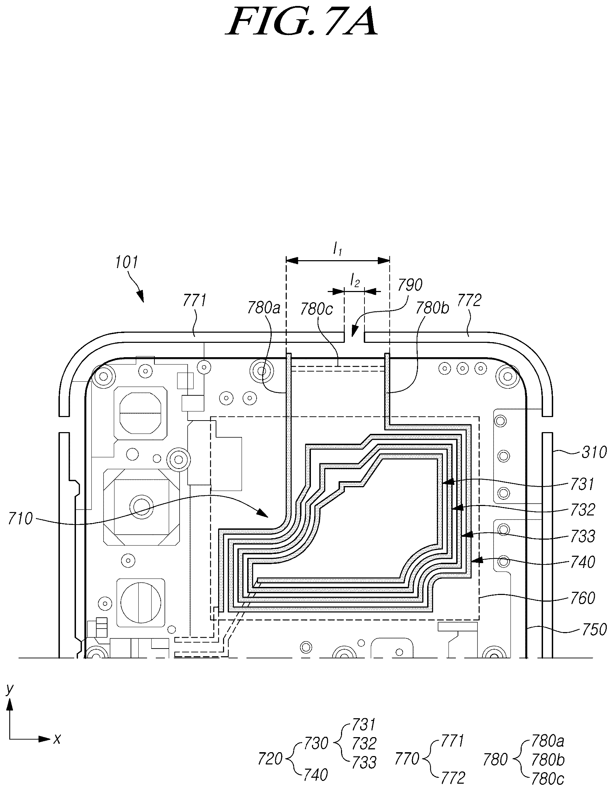

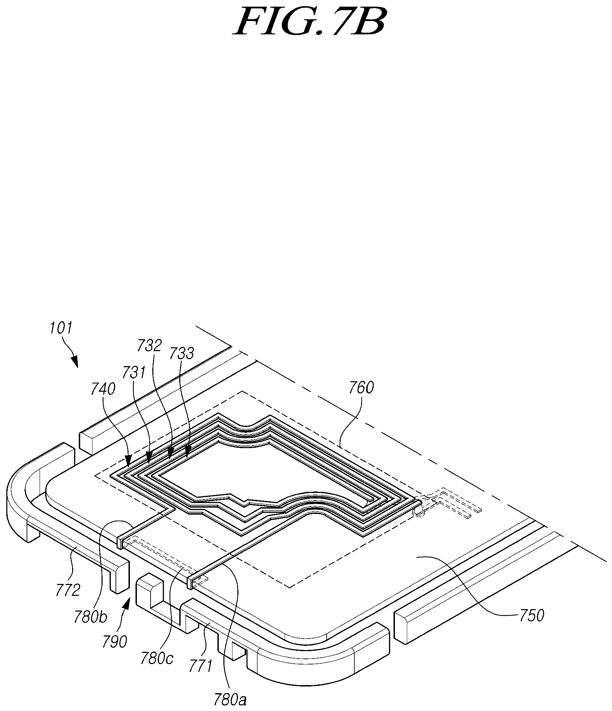

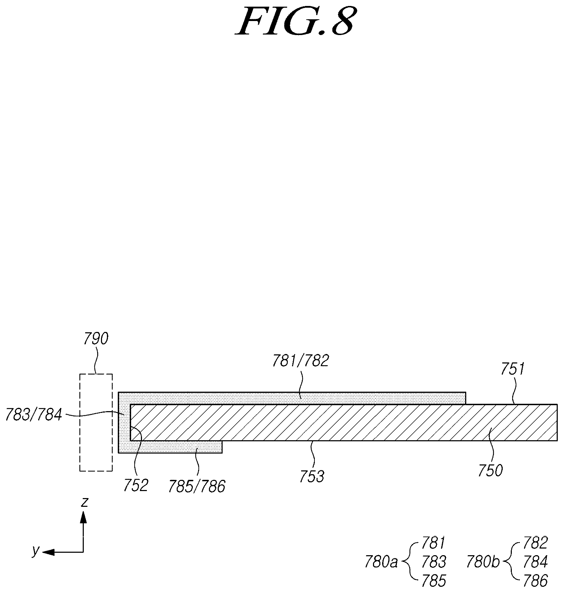

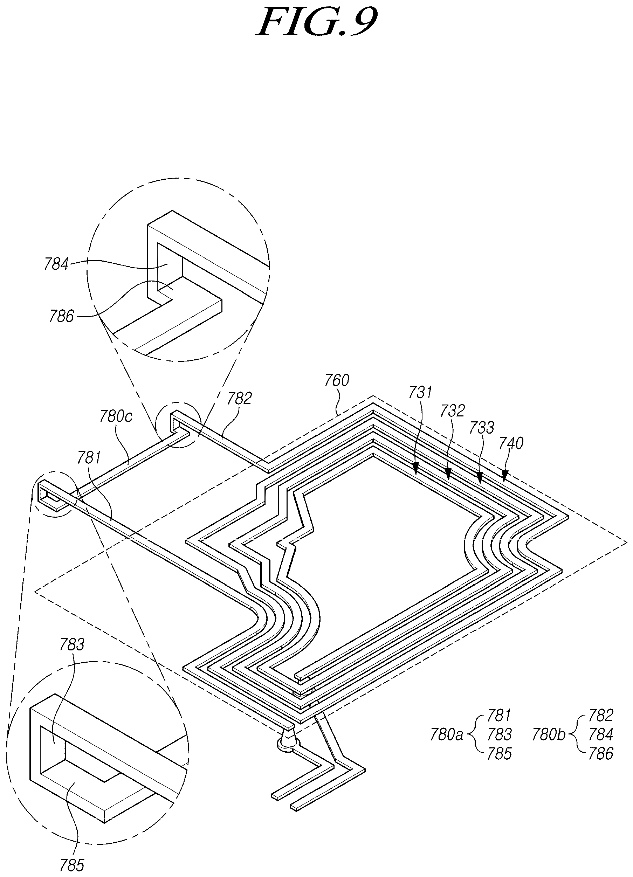

FIG. 7A is a view illustrating a configuration of an NFC antenna according to an embodiment of the disclosure. FIG. 7B is a view illustrating the configuration of the NFC antenna of FIG. 7A. FIG. 8 is a side view schematically illustrating the configuration of the NFC antenna of FIGS. 7A and 7B. FIG. 9 is a view illustrating an antenna pattern of the NFC antenna of FIGS. 7A, 7B, and 8.

FIG. 7A illustrates an NFC antenna configuration when viewed from above (e.g., the rear surface). FIG. 7B illustrates, the NFC antenna configuration when viewed from an upper side. FIG. 8 illustrates the NFC antenna configuration when viewed from a left side or a right side. FIG. 9 illustrates the configuration of the NFC antenna illustrated by excluding a support plate on which the NFC antenna is disposed.

In the embodiments of FIGS. 7A to 9, for convenience of description, an NFC antenna is described which is an example of a loop antenna, but the description of the present embodiment may be applied to different types of loop antennas other than an NFC antenna in the same or a similar manner.

Referring to FIGS. 7A to 9, the electronic device 101 may include a housing 310 and an NFC antenna 710 disposed in the housing 310. The description of the housing 310 includes the description of the housing 310 of FIGS. 2 to 5C. Therefore, no duplicate description is given.

According to an embodiment, the housing 310 may include a conductive member 770 (e.g., the conductive member 530 of FIG. 5C) as a part of the housing 310. The description of the conductive member 770 includes the description of the conductive member 530 of FIG. 5C.

According to an embodiment, the conductive member 770 may be segmented (or divided) into the first conductive member 771 and the second conductive member 772 by the segmented portion 790. According to an embodiment, the segmented portion 790 may be positioned between the first conductive member 771 and the second conductive member 772. In the disclosure, the segmented portion 790 may be referred to as a non-conductive segmented portion. In the disclosure, the first conductive member 771 may be referred to as a first segment, and the second conductive member 772 may be referred to as a second segment.

According to an embodiment, the conductive member 770 may form a portion of a first side surface (e.g., an upper side surface) of the electronic device 101. The conductive member 770 may include a first segment 771 and a second segment 772 formed in a first direction and a second direction opposite to each other with respect to the non-conductive segmented portion 790 forming another portion of the first side surface.

According to an embodiment, the segmented portion 790 may be filled with a dielectric. The dielectric may be, e.g., air, plastic, ceramic, glass, or other dielectric. In the disclosure, the segmented portion 790 may be referred to as a gap or a gap portion.

According to an embodiment, the shapes of the first conductive member 771 and the second conductive member 772 may be shapes for forming an antenna (e.g., a metal antenna or a metal frame antenna) having required antenna performance characteristics.

According to an embodiment, the NFC antenna 710 may be a three-dimensional (3D) antenna.

According to an embodiment, the NFC antenna 710 may be a laser direct structuring (LDS) antenna formed (or provided) on the support plate 750.

According to an embodiment, the NFC antenna 710 may include a plurality of loop portions 720 connected to each other. According to an embodiment, each loop portion may substantially form a corresponding loop. According to an embodiment, one loop may correspond to one turn.

According to an embodiment, the plurality of loop portions 720 may include at least one first loop portion 730 and/or at least one second loop portion 740.

According to an embodiment, the first loop portion 730 may substantially form a loop. According to an embodiment, the second loop portion 740 may substantially form a loop that is substantially different in shape and/or position from the loop of the first loop portion 730. For example, as shown in Fig. 7A, the first loop portion 730 is in a plane parallel to the rear side (e.g., surface) of the electronic device. As shown in Fig. 7A, the second loop portion 740 is between the side wall of the housing 310 and the first loop portion 730. As shown in Fig. 7B, the second loop portion 740 is at least partially in a plane parallel to the side wall of the electronic device. In other words, the second loop portion 740 may be closer to a side of the housing 310 than the first loop portion 730 and may be parallel with that side of the housing 310. In this way, the second loop portion 740 improves the performance of the NFC antenna 710 in the direction of that side.

According to an embodiment, the arrangement of the plurality of loop portions 720 may be the same as that illustrated in FIG. 7A but is not limited thereto. For example, a plurality of loops (or loop portions) may be arranged in circular shapes, and may, for example, form a spiral shape.

According to an embodiment, the at least one first loop portion 730 may include an innermost loop portion 731 among the plurality of loop portions 720, a loop portion 732 disposed outside the loop portion 731, and/or a loop portion 733 disposed outside the loop portion 732.

According to an embodiment, each loop portion included in the at least one first loop portion 730 may be arranged in a common rotation direction.

According to an embodiment, the spacing between consecutive loop portions included in the at least one first loop portion 730 may be the same.

According to an embodiment, the at least one first loop portion 730 may be disposed inside the first area 760 on the first plane 751 of the support plate 750 (e.g., the support plate 390 of FIG. 4 or the support plate 540 of FIG. 5B). For example, all of the at least one first loop portion 730 may be disposed (or formed) in the first area 760 on the first plane 751 of the support plate 750. The shape of the first area 760 may be a rectangular shape as illustrated in FIG. 7A, but it is not limited thereto. For example, the shape of the first area 760 may be the same as the shape of the first area 550 of FIG. 5A.

According to an embodiment, at least a portion of the first area 760 may be a ferrite area including a ferrite core (or, ferrite).

According to an embodiment, when the at least one first loop portion 730 is connected to a current source, e.g., an NFC integrated circuit (IC) for driving the NFC antenna, the at least one first loop portion 730 may generate a magnetic field in the rear direction of the electronic device 101. For example, similarly to the plurality of loop portions of the NFC antenna 510 of FIGS. 5A to 5C, the at least one first loop portion 730 may generate a magnetic field in the rear direction of the electronic device 101. Satisfactory NFC performance in the rear direction may be provided by the at least one first loop portion 730.

According to an embodiment, the antenna configuration for the at least one first loop portion 730 (e.g., the area of the first area 760, the number of loops (or the number of turns), the length of the loop, and/or the interval between loops) may be set as a value capable of meeting the required NFC performance, or satisfactory NFC performance, in the rear direction.

According to an embodiment, one of the at least one second loop portion 740 may be, e.g., the outermost loop disposed at the outermost among the plurality of loop portions 720, as illustrated in FIG. 7A.

According to an embodiment, the at least one second loop portion 740 may include at least one portion disposed (or positioned) inside the first area 760 (or the first loop portion 730) and at least one protruding portion 780 disposed outside the first area 760.

According to an embodiment, the at least one protruding portion 780 disposed (or positioned) outside the first area 760 (or the first loop portion 730) may include a first protruding portion 780a, a second protruding portion 780b, and a third protruding portion 780c.

According to an embodiment, the first protruding portion 780a may protrude (e.g., extend) toward the first segment 771 of the conductive member 770 with respect to the first loop portion 730. The first protruding portion 780a may extend to have at least a first end portion adjacent to the first segment 771 of the conductive member 770. The first end portion adjacent to the first segment 771 of the conductive member 770may include, e.g., an edge adjacent to the first segment 771 of the conductive member 770and/or a portion adjacent to the edge.

According to an embodiment, the second protruding portion 780b may protrude (e.g., extend) toward the second segment 772 of the conductive member 770 with respect to the first loop portion 730. The second protruding portion 780b may extend to have at least a second end portion adjacent to the second segment 772 of the conductive member 770. The second end portion adjacent to the second segment 772 of the conductive member 770may include, e.g., an edge adjacent to the second segment 772 of the conductive member 770and/or a portion adjacent to the edge.

According to an embodiment, the third protruding portion 780c may extend (e.g., disposed or positioned) between the first end portion and the second end portion so that the first protruding portion 780a and the second protruding portion 780b are connected through the third protruding portion 780c. According to an embodiment, when the third protruding portion 780c is connected to the current source, the third protruding portion 780c may be configured to generate a magnetic field in at least a first side direction (e.g., an upper side direction).

According to an embodiment, when viewed from the first side surface (e.g., the upper side surface), the third protruding portion 780c may overlap the non-conductive segmented portion 790, at least a portion of the first segment 771, and at least a portion of the second segment 772.

According to an embodiment, the first protruding portion 780a and the second protruding portion 780b may be formed on a first side (e.g., surface) (e.g., the first plane 751) of the support plate 750, and the third protruding portion 780c may be formed on a second side (e.g., surface) (e.g., the third plane 753) opposite to the first side (e.g., surface) of the support plate 750.

According to an embodiment, the first loop portion 730 may include a plurality of loop portions (731, 732, and 733), and a distance between the third protruding portion 780c and the outermost loop portion 733 among the plurality of loop portions 731, 732, and 733 of the first loop portion 730 may be longer than a distance between two adjacent loop portions among the plurality of loop portions (731, 732, and 733).

According to an embodiment, as shown in FIG. 9, the first protruding portion 780a may include a first portion 781, a third portion 783, and/or a fifth portion 785.

According to an embodiment, the second protruding portion 780b may include a second portion 782, a fourth portion 784, and/or a sixth portion 786.

According to an embodiment, each of the first portion 781 and the second portion 782 may extend from the first area 760 (e.g., a point in the first area 760) on the first plane 751 of the support plate 750 toward the conductive member 770. For example, the first portion 781 may extend to a position (e.g., at a first end portion) adjacent to the first conductive member 771, and the second portion 782 may extend to a position (e.g., at a second end portion) adjacent to the second conductive member 772. For example, the first portion 781 may extend to a position closest to the first conductive member 771 on the first plane 751 of the support plate 750, and the second portion 782 may extend to a position closest to the second conductive member 772 on the first plane 751 of the support plate 750.

According to an embodiment, as illustrated in FIG. 7A, the first portion 781 and the second portion 782 may be disposed parallel to each other when viewed from above (i.e., when viewed from the rear) but are not limited thereto.

According to an embodiment, the first conductive member 771 may form a first antenna (e.g., a first metal antenna), and the second conductive member 772 may form a second antenna (e.g., a second metal antenna).

According to an embodiment, the third portion 783 may extend from the first portion 781 (e.g., one end or one point of the first portion 781) on the first plane 751 to the third plane 753 along the second plane 752 perpendicular to the first plane 751. According to an embodiment, the second plane 752 may be a plane corresponding to a side wall of the support plate 750.

According to an embodiment, the fourth portion 784 may extend from the second portion 782 (e.g., one end or one point of the second portion 782) on the first plane 751 to the third plane 753 along the second plane 752 perpendicular to the first plane 751.

According to an embodiment, as illustrated in FIG. 7B, the third portion 783 and the fourth portion 784 may be disposed parallel to each other when viewed from the side (e.g., when viewed from the upper side) but are not limited thereto.

According to an embodiment, the fifth portion 785 may extend from the third portion 783 (e.g., one end or one point of the third portion 783) on the third plane 753 in a direction away from the conductive member 770. For example, when viewed from the side (e.g., when viewed from the left/right side), the fifth portion 785 may be parallel to the first portion 781. According to an embodiment, the extension length of the fifth portion 785 may be shorter than the extension length of the first portion 781.

According to an embodiment, the sixth portion 786 may extend from the fourth portion 784 (e.g., one end or one point of the fourth portion 784) on the third plane 753 in a direction away from the conductive member 770. For example, when viewed from the side (e.g., when viewed from the left/right side), the sixth portion 786 may be parallel to the second portion 782. The extension length of the sixth portion 786 may be shorter than the extension length of the second portion 782.

According to an embodiment, the fifth portion 785 and the sixth portion 786 may be disposed parallel to each other when viewed from above (e.g., when viewed from the rear) but are not limited thereto.

Through this extension structure, the at least one second loop 720 may extend from the first plane 751 (outside) of the support plate 750 to the third plane 753 (inside) opposite to the first plane 751. Accordingly, the at least one second loop 720 may have a 3D shape.

According to an embodiment, the third protruding portion 780c may extend from the fifth portion 785 (e.g., one end or one point of the fifth portion 785) on the third plane 753 to the sixth portion 786 (e.g., one end or one point of the sixth portion 786) on the third plane 753 along the third plane 753.

According to an embodiment, the third protruding portion 780c may include a segmented portion 790 of the conductive member 770.

According to an embodiment, e.g., as illustrated in FIG. 7B, when viewed from the side (e.g., when viewed from the upper side), at least a portion of the third protruding portion 780c may overlap the segmented portion 790 of the conductive member 770.

According to an embodiment, , when viewed from the side (e.g., when viewed from the upper side), at least a portion of the third protruding portion 780c may be disposed to pass through the segmented portion 790 of the conductive member 770.

According to an embodiment, , when viewed from above (e.g., when viewed from the rear), at least a portion of the third protruding portion 780c may be disposed adjacent to and parallel to the segmented portion 790 of the conductive member 770.

According to an embodiment, e.g., as illustrated in FIG. 7A, when viewed from above (e.g., when viewed from the rear), at least a portion of the third protruding portion 780c may be spaced apart from and disposed parallel to the segmented portion 790 of the conductive member 770.

According to an embodiment, the third protruding portion 780c may be perpendicular to the support plate 750 and may pass through a plane that passes through the segmented portion 790 of the conductive member 770.

According to an embodiment, as illustrated in FIG. 7A, the length l₁ of the third protruding portion 780c may be longer than the length l₂ (or width) of the segmented portion 790. For example, when viewed from the side, the length of the third protruding portion 780c may be longer than the length of the portion where the third protruding portion 780c and the segmented portion 790 overlap each other. In this case, the length of the segmented portion 790 is the length of a portion where the third protruding portion 780c and the segmented portion 790 overlap each other. Due to the at least one protruding portion 780 disposed outside the first area 760 of the above-described structure, when the at least one second loop portion 740 is connected to the current source, the at least one second loop portion 740, and thus the NFC antenna 710, may generate a magnetic field in the direction of the first side surface (or upper side) of the electronic device 101. In effect, the at least one protruding portion 780 generates a magnetic field in the direction of the first side surface (or upper side) of the electronic device 101, when the at least one second loop portion 740 is connected to the current source. In effect, unlike the plurality of loops of the NFC antenna 510 of FIGS. 5A to 5C, the second loop portion 740 generates a magnetic field in the upper direction (e.g., the upper direction 502 of FIG. 5B) of the electronic device 101, when the at least one second loop portion 740 is connected to the current source. In this way, NFC performance in the upper direction can be further increased or improved.

Accordingly, when compared to the NFC antenna 510 of FIG. 5A, the NFC antenna 710 having the structure (or pattern), illustrated in FIGS. 7A to 9, may meet not only NFC performance in the rear direction but also NFC performance in the upper direction.

Meanwhile, the conductive member 770 may block at least a portion of the magnetic field in the upper direction generated by the NFC antenna 710 (i.e., the magnetic field generated by the at least one second loop portion 740). On the other hand, the segmented portion 790 may allow therethrough most of the magnetic field in the upper direction generated by the NFC antenna 710 (i.e., the magnetic field generated by the second loop portion 740). For example, the segmented portion 790 may have a higher pass rate of the magnetic field, i.e., a higher magnetic field permeability, (i.e., allow more of the magnetic field therethrough) in the upper direction than the first conductive member 771 and the second conductive member 772. Accordingly, when at least a portion of the third protruding portion 780c overlaps the segmented portion 790, the intensity of the magnetic field transferred upward of the electronic device 101 may be stronger than when not overlapping the segmented portion 790. In this way, NFC performance in the upper direction can be further increased or improved.

Accordingly, when compared to the NFC antenna 510 of FIG. 5A, the NFC antenna 710 having the structure (or pattern) illustrated in FIGS. 7A to 9 may meet not only NFC performance in the rear direction but also NFC performance in the upper direction.

According to an embodiment, the antenna configuration (e.g., the area of the first area 760, the number of loops (or the number of turns), the length of the loop, and/or the interval between loops) for the at least one second loop portion 740 may be chosen to meet the required or satisfactory NFC performance in the upper direction.

According to an embodiment, as illustrated in FIGS. 7A, 7B, and 9, one end of the innermost loop of the at least one first loop portion 730 and one end of the outermost loop of the at least one second loop portion 740 may be electrically connected to at least one electric element of a printed circuit board (e.g., the printed circuit board 340 of FIG. 4). For example, the NFC antenna 710 may be electrically connected to at least one electric element (e.g., an NFC IC (e.g., the NFC chip 520 of FIG. 5A) disposed on the printed circuit board) of the printed circuit board via a connection member 525, as shown in FIG. 5B. For example, the NFC antenna 710 may contact a connection member (e.g., the connection member 525 of FIG. 5B) through a through-hole in the support plate 750, and the connection member may be electrically connected to an NFC IC (or a line connected to the NFC IC) disposed on the printed circuit board. Accordingly, the NFC antenna 710 and the NFC IC may be electrically connected, and the NFC IC may drive the NFC antenna 710.

Meanwhile, according to an embodiment, unlike those illustrated in FIGS. 7A to 9, when viewed from the side (e.g., when viewed from the upper side), the third protruding portion 780c included in the at least one second loop portion 740 may not overlap the segmented portion 790 of the conductive member 770. In this case, the performance of the NFC antenna in the upper direction may be lower than the performance of the NFC antenna 710 having the structure illustrated in FIGS. 7A to 9.

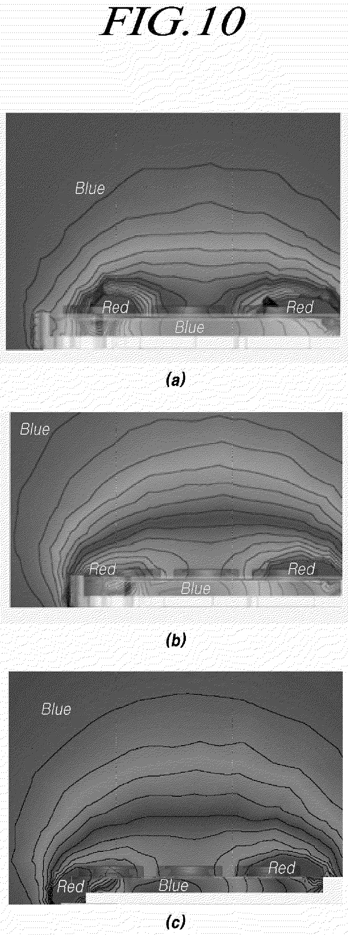

FIG. 10 illustrates an example of magnetic field distribution patterns produced by NFC antennas according to an embodiment of the disclosure. The Blue regions indicate regions of low magnetic field strength, and the Red regions indicate regions of high magnetic field strength.

FIG. 10(a) illustrates an magnetic field distribution in an upper direction of the electronic device 101 of the NFC antenna 510 of FIG. 5A.

FIG. 10(b) illustrates an magnetic field distribution in the upper direction of the electronic device 101 of an NFC antenna 710 similar to that of FIGS. 7A, 7B, 8 and 9, but having a structure in which the third protruding portion 780c does not overlap the segmented portion 790 when viewed from the side, unlike the examples of FIGS. 7A and 7B.

FIG. 10(c) illustrates an magnetic field distribution in the upper direction of the electronic device 101 of the NFC antenna 710 of FIGS. 7A, 7B, 8 and 9 and having a structure in which the third protruding portion 780c overlaps the segmented portion 790 when viewed from the side, as illustrated in FIGS. 7A and 7B.

Compared with FIG. 10(a), in the case of FIG. 10(b), it can be seen that a larger amount of magnetic field is transferred in the upper direction due to a loop (e.g., the second loop portion 740 of FIG. 7A) that generates a magnetic field in the upper direction.

Compared with the case of FIG. 10(b), in the case of FIG. 10(c), because a portion (e.g., a portion of the third protruding portion 780c of FIG. 7A) of the loop portion (e.g., the second loop portion 740 of FIG. 7A) generating the magnetic field in the upper direction overlaps the segmented portion (e.g., the segmented portion 790 of FIG. 7A), the magnetic field strength in the upper direction is increased. This is because, as described above, the magnetic field transmittance or permeability of the segmented portion is higher than that of the conductive member (e.g., the conductive member 770 of FIG. 7A). Therefore, in effect, more of the magnetic field can pass through the segmented portion.

Table 2 is a table evaluating NFC performance according to the tag position of the electronic device.

**[Table 2]**

| | | | |
|---|---|---|---|
| Measurement angle | 0° | 45° | 90° |
| First performance value | 71% | 54% | 19% |
| Second performance value | 83% | 61% | 36% |
| Third performance value | 83% | 65% | 47% |

Table 2 shows the performance (e.g., NFC recognition rate) of NFC tagging, when the electronic device 101 including the NFC antenna, recognizes the card for each position (e.g., the positions shown in FIG. 6) according to the measurement angle (e.g., 0°, 45°, 90°) at a distance of 45 mm from the NFC reader in the card mode (card reader).

The first performance value is the performance value corresponding to the first antenna structure of FIG. 10(a), the second performance value is the performance value corresponding to the second antenna structure of FIG. 10(b), and the third performance value is the performance value corresponding to the third antenna structure of FIG. 10(c).

Referring to Table 1, in the case of the first performance value, the NFC recognition rate at the position of the measurement angle 0° is 71%, the NFC recognition rate at the position of the measurement angle 45° is 54%, and the NFC recognition rate at the position of the measurement angle 90° is 19%. If the electronic device has the first antenna structure as described above, it may be identified that only the performance in the rear direction of the electronic device is met or is satisfactory, but the performance in the rear direction of the electronic device is not met or is unsatisfactory.

In the case of the second performance value, it is shown that the NFC recognition rate at the position of the measurement angle 0° is 83%, the NFC recognition rate at the position of the measurement angle 45° is 61%, and the NFC recognition rate at the position of the measurement angle 90° is 36%. If the electronic device has the second antenna structure as described above, it may be identified that the performance in the rear direction of the electronic device is met or is satisfactory, and the performance in the rear direction of the electronic device is higher than that of the first antenna structure.

For the third performance value, it is shown that the NFC recognition rate at the position of the measurement angle 0° is 83%, the NFC recognition rate at the position of the measurement angle 45° is 65%, and the NFC recognition rate at the position of the measurement angle 90° is 47%. If the electronic device has the third antenna structure as described above, it may be identified that the performance in the rear direction of the electronic device is met or is satisfactory, and the performance in the rear direction of the electronic device is higher than that of the second antenna structure.

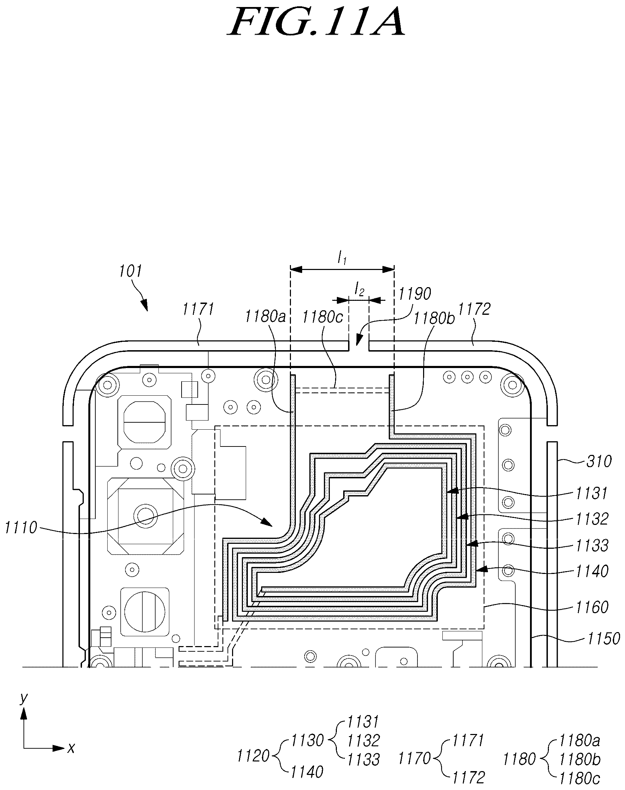

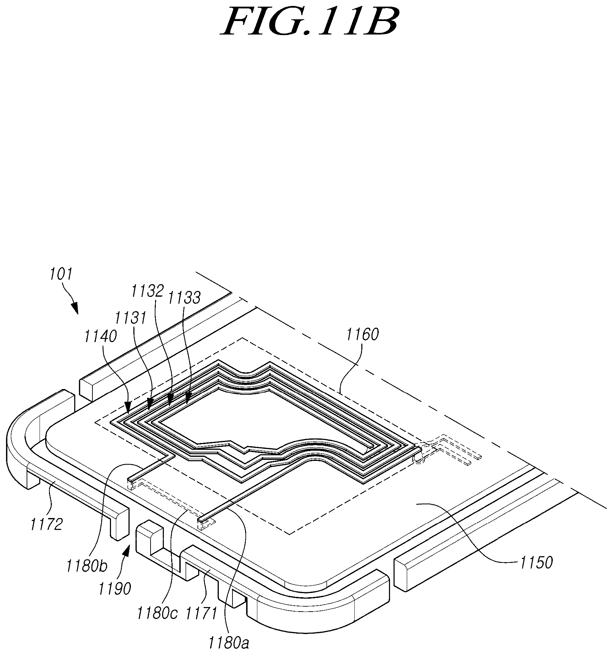

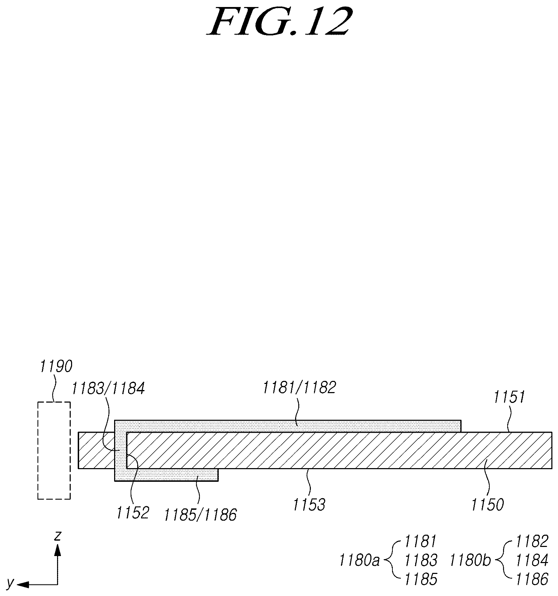

FIGS. 11A is a view illustrating a configuration of an NFC antenna according to an embodiment of the disclosure. FIG. 11B is a view illustrating the configuration of the NFC antenna of FIG. 11A. FIG. 12 is a side view schematically illustrating the configuration of the NFC antenna of FIGS. 11A and 11B.

FIG. 11A illustrates an NFC antenna configuration when viewed from above (e.g., the rear side). FIG. 11B illustrates an NFC antenna configuration when viewed from an upper side. FIG. 12 illustrates an NFC antenna configuration when viewed from a left side or a right side.

The NFC antenna configuration of the embodiments of FIGS. 11A to 12 may be substantially the same as the NFC antenna configuration of FIGS. 7A to 9, except that, when the loop portion (or the protruding portion) extends from the first plane (the outside) of the support plate to the opposite plane (the inner side), the loop portion (or the protruding portion) extends through the through-hole in the support plate rather than along the side wall of the support plate. Thus, no duplicate description thereof is given.

In the embodiments of FIGS. 11A to 12, for convenience of description, an NFC antenna is described which is an example of a loop antenna, but the description of the present embodiment may be applied to different types of loop antennas other than an NFC antenna in the same or a similar manner.

Referring to FIGS. 11A to 12, the electronic device 101 may include a housing 310 and an NFC antenna 1110 disposed in the housing 310. The description of the housing 310 includes the description of the housing 310 of FIGS. 2 to 5C and the housing 310 of FIGS. 7A to 7B. Therefore, no duplicate description is given.

According to an embodiment, the housing 310 may include a conductive member 1170 (e.g., the conductive member 530 of FIG. 5C or the conductive member 770 of FIG. 7A/B) as a part of the housing 310. The description of the conductive member 1170 includes the description of the conductive member 530 of FIG. 5C and the conductive member 770 of FIGS. 7A and B.

According to an embodiment, the conductive member 1170 may be segmented (or divided) into the first conductive member 1171 and the second conductive member 1172 by the segmented portion 1190. According to an embodiment, the segmented portion 1190 may be positioned between the first conductive member 1171 and the second conductive member 1172. In the disclosure, the segmented portion 1190 may be referred to as a non-conductive segmented portion. In the disclosure, the first conductive member 1171 may be referred to as a first segment, and the second conductive member 1172 may be referred to as a second segment.

According to an embodiment, the conductive member 1170 may form a portion of a first side surface (e.g., an upper side surface) of the electronic device 101. The conductive member 1170 may include a first segment 1171 and a second segment 1172 formed in a first direction and a second direction opposite to each other with respect to the non-conductive segmented portion 1190 forming another portion of the first side surface.

According to an embodiment, the segmented portion 1190 may be filled with a dielectric. The dielectric may be, e.g., air, plastic, ceramic, glass, or other dielectric. In the disclosure, the segmented portion 1190 may be referred to as a gap or a gap portion.

According to an embodiment, the NFC antenna 1110 may be a 3D antenna.

According to an embodiment, the NFC antenna 1110 may be an LDS antenna formed (or provided) on the support plate 1150.

According to an embodiment, the NFC antenna 1110 may include a plurality of loop portions 1120 connected to each other. According to an embodiment, each loop portion may substantially form a corresponding loop. According to an embodiment, one loop may correspond to one turn.

According to an embodiment, the plurality of loop portions 1120 may include at least one first loop portion 1130 and/or at least one second loop portion 1140.

According to an embodiment, the first loop portion 1130 may substantially form a loop. According to an embodiment, the second loop portion 1140 may substantially form a loop that is substantially different in shape and/or position from the loop of the first loop portion 1130.

According to an embodiment, the at least one first loop portion 1130 may include an innermost loop portion 1131 among the plurality of loop portions 1120, a loop portion 1132 disposed outside the loop portion 1131, and/or a loop portion 1133 disposed outside the loop portion 1132. The description of the loop portion 1131, the loop portion 1132, and the loop portion 1133 included in the at least one first loop portion 1130 and the at least one first loop portion 1130 itself is equivalent to the description of these features in relation to FIGS. 7A to 9. Therefore, no duplicate description is given.

According to an embodiment, one of the at least one second loop portion 1140 may be, e.g., the outermost loop portion disposed at the outermost of the plurality of loop portions 1120, as illustrated in FIG. 11A.

According to an embodiment, the at least one second loop portion 1140 may include at least one portion disposed (or positioned) inside the first area 1160 (or the first loop portion 1130) and at least one protruding portion 1180 disposed outside the first area 1160.

According to an embodiment, the at least one protrusion 1180 disposed (or positioned) outside the first area 1160 (or the first loop portion 1130) may include a first protrusion 1180a, a second protrusion 1180b, and a third protrusion 1180c.

According to an embodiment, the first protruding portion 1180a may protrude (e.g., extend) toward the first segment 1171 of the conductive member 1170 with respect to the first loop portion 1130. The first protruding portion 1180a may extend to have at least a first end portion adjacent to the first segment 1171 of the conductive member 1170. The first end portion adjacent to the first segment 1171 of the conductive member 1170may include, e.g., an edge adjacent to the first segment 1171 of the conductive member 1170 and/or a portion adjacent to the edge.

According to an embodiment, the second protruding portion 1180b may protrude toward the second segment 1172 of the conductive member 1170 with respect to the first loop portion 1130. The second protruding portion 780b may extend to have at least a second end portion adjacent to the second segment 1172 of the conductive member 1170. The second end portion adjacent to the second segment 1172 of the conductive member 1170 may include, e.g., an edge adjacent to the second segment 1172 of the conductive member 1170 and/or a portion adjacent to the edge.

According to an embodiment, the third protruding portion 1180c may extend between the first end portion and the second end portion so that the first protruding portion 1180a and the second protruding portion 1180b are connected through the third protruding portion 1180c. According to an embodiment, when the third protruding portion 1180c is connected to the current source, the third protruding portion 1180c may be configured to generate a magnetic field in at least a first side direction (e.g., an upper side direction).

According to an embodiment, when viewed from the first side surface (e.g., the upper side surface), the third protruding portion 1180c may overlap the non-conductive segmented portion 1190, at least a portion of the first segment 1171, and at least a portion of the second segment 1172.

According to an embodiment, the first protruding portion 1180a and the second protruding portion 1180b may be formed on a first side (e.g., surface) (e.g., the first plane 1151) of the support plate 1150, and the third protruding portion 1180c may be formed on a second side (e.g., surface) (e.g., the third plane 1153) opposite to the first side (e.g., surface) of the support plate 1150.

According to an embodiment, the first loop portion 1130 may include a plurality of loop portions (1131, 1132, and 1133), and a distance between the third protruding portion 1180c and the outermost loop portion 1133 of the plurality of loop portions (1131, 1132, and 1133) of the first loop portion 1130 may be longer than a distance between two adjacent loop portions of the plurality of loop portions (1131, 1132, and 1133).

According to an embodiment, the first protruding portion 1180a may extend to the second side (e.g., surface) along a first through-hole in the support plate 1150, and the second protruding portion 1180b may extend to the second side (e.g., surface) along a second through-hole in the support plate 1150.

According to an embodiment, the first protruding portion 1180a may include a first portion 1181, a third portion 1183, and/or a fifth portion 1185.

According to an embodiment, the second protruding portion 1180b may include a second portion 1182, a fourth portion 1184, and/or a sixth portion 1186.

According to an embodiment, each of the first portion 1181 and the second portion 1182 may extend from the first area 1160 (e.g., a point in the first area 1160) on the first plane 1151 of the support plate 1150 toward the conductive member 1170. For example, the first portion 1181 may extend to a position closer to the first conductive member 1171, and the second portion 1182 may extend to a position closer to the second conductive member 1172. For example, the first portion 1181 may extend to a position closest to the first conductive member 1171 on the first plane 751 of the support plate 1150, and the second portion 1182 may extend to a position closest to the second conductive member 1172 on the first plane 1151 of the support plate 1150.

According to an embodiment, as illustrated in FIG. 11A, the first portion 1181 and the second portion 1182 may be disposed parallel to each other when viewed from above (i.e., when viewed from the rear) but are not limited thereto.

According to an embodiment, the first conductive member 1171 may form a first antenna (e.g., a first metal antenna), and the second conductive member 1172 may form a second antenna (e.g., a second metal antenna).

According to an embodiment, e.g., as illustrated in FIG. 12, the third portion 1183 may extend from the first portion 1181 (e.g., one end or one point of the first portion 1181) on the first plane 1151 to the third plane 1153 along the through-hole 1152. According to an embodiment, the through-hole 1152 for the third portion 1183 may be formed at one point adjacent the first portion 1181 (e.g., a point at which the first portion 1181 is closest to the first conductive member 1171, as illustrated in FIG. 11B).

According to an embodiment, the fourth portion 1184 may extend from the second portion 1182 (e.g., one end or one point of the second portion 1182) on the first plane 1151 to the third plane 1153 along the through-hole 1152. According to an embodiment, the through-hole 1152 for the fourth portion 1184 may be formed at one point adjacent the second portion 1182 (e.g., a point at which the second portion 1182 is closest to the first conductive member 1171, as illustrated in FIG. 11B).

According to an embodiment, as illustrated in FIG. 11B, the third portion 1183 and the fourth portion 1184 may be disposed parallel to each other when viewed from the side (e.g., when viewed from the upper side), but are not limited thereto.

According to an embodiment, the fifth portion 1185 may extend from the third portion 1183 (e.g., one end or one point of the third portion 1183) on the third plane 1153 in a direction away from the conductive member 1170. For example, when viewed from the side (e.g., when viewed from the left/right side), the fifth portion 1185 may be parallel to the first portion 1181. According to an embodiment, the extension length of the fifth portion 1185 may be shorter than the extension length of the first portion 1181.

According to an embodiment, the sixth portion 1186 may extend from the fourth portion 1184 (e.g., one end or one point of the fourth portion 1184) on the third plane 1153 in a direction away from the conductive member 1170. For example, when viewed from the side (e.g., when viewed from the left/right side), the sixth portion 1186 may be parallel to the second portion 1182. The extension length of the sixth portion 1186 may be shorter than the extension length of the second portion 1182.

According to an embodiment, the fifth portion 1185 and the sixth portion 1186 may be disposed parallel to each other when viewed from above (e.g., when viewed from the rear), but are not limited thereto.

Through this extension structure, the second loop portion1140 may extend from the first plane 1151 (outside) of the support plate 1150 to the third plane 1153 (inside) opposite to the first plane 1151. Accordingly, the second loop portion1140 may have a 3D shape.

According to an embodiment, the third protruding portion 1180c may extend from the fifth portion 1185 (e.g., one end or one point of the fifth portion 1185) on the third plane 1153 to the sixth portion 1186 (e.g., one end or one point of the sixth portion 1186) on the third plane 1153 along the third plane 1153.

According to an embodiment, the third protruding portion 1180c may include a segmented portion 1190 of the conductive member 1170.

According to an embodiment, e.g., as illustrated in FIG. 11B, when viewed from the side (e.g., when viewed from the upper side), at least a portion of the third protruding portion 1180c may overlap the segmented portion 1190 of the conductive member 1170.

According to an embodiment, when viewed from the side (e.g., when viewed from the upper side), at least a portion of the third protruding portion 1180c may be disposed to pass through the segmented portion 1190 of the conductive member 1170.

According to an embodiment, e.g., when viewed from above (e.g., when viewed from the rear), at least a portion of the third protruding portion 1180c may be disposed adjacent to and parallel to the segmented portion 1190 of the conductive member 1170.

According to an embodiment, e.g., as illustrated in FIG. 11A, when viewed from above (e.g., when viewed from the rear), at least a portion of the third protruding portion 1180c may be spaced apart from and disposed parallel to the segmented portion 1190 of the conductive member 1170.

According to an embodiment, the third protruding portion 1180c may pass through a plane that is perpendicular to the support plate 1150 and that passes through the segmented portion 1190 of the conductive member 1170.

According to an embodiment, as illustrated in FIG. 11A, the length l₁ of the third protruding portion 1180c may be longer than the length l₂ (or width) of the segmented portion 1190. For example, when viewed from a side, a length of the seventh portion 1187 may be longer than a length of a portion where the seventh portion 1187 and the segmented portion 1190 overlap each other. In this case, the length of the segmented portion 1190 is the length of a portion where the third protruding portion 1180c and the segmented portion 1190 overlap each other.

According to an embodiment, the antenna configuration (e.g., the area of the first area 1160, the number of loops (or the number of turns), the length of the loop, and/or the interval between loops) for the at least one second loop portion 1140 may be chosen to meet the required or satisfactory NFC performance in the upper direction.

As described above, the NFC antenna 1110 of FIGS. 11A to 12 may be substantially the same as the NFC antenna 710 of FIGS. 7A to 9, except that a through-hole is used instead of a side wall to extend the loop pattern from the outside to the inside of the support plate. Accordingly, the NFC performance in the rear and upper directions of the NFC antenna 1110 may have substantially the same performance as the NFC performance in the rear and upper directions of the NFC antenna 710 described above. Meanwhile, according to an embodiment, unlike those illustrated in FIGS. 7A to 8, when viewed from the side (e.g., when viewed from the upper side), the third protruding portion 1180c included in the at least one second loop 1140 may not overlap the segmented portion 1790 of the conductive member 1170.

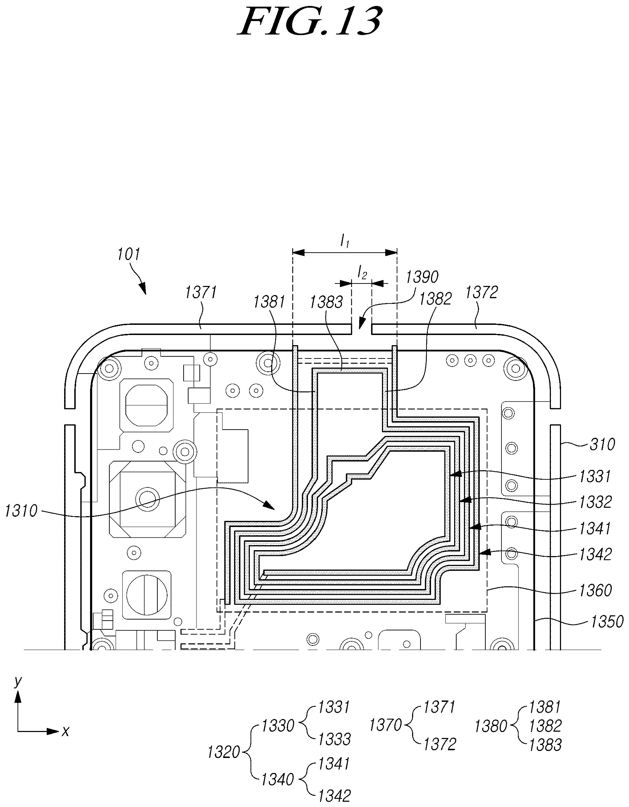

FIG. 13 is a view illustrating a configuration of an NFC antenna according to an embodiment of the disclosure.

FIG. 13 illustrates, e.g., an NFC antenna configuration when viewed from above (e.g., the rear side).

The NFC antenna configuration of the embodiment of FIG. 13 may be substantially the same as the NFC antenna configuration of FIGS. 7A to 9 and FIGS. 11A to 12, except that there are a plurality of second loop portions, e.g., the second loop portion 740 of FIGS. 7A to 9 and the second loop portions of FIGS. 11A to 12, generating the magnetic field in the upper direction.

In the embodiment of FIG. 13, for convenience of description, an NFC antenna is described which is an example of a loop antenna, but the description of the present embodiment may be applied to different types of loop antennas other than an NFC antenna in the same or similar manner.

Referring to FIG. 13, the electronic device 101 may include a housing 310 and an NFC antenna 1310 disposed in the housing 310. The description of the housing 310 includes the description of the housing 310 of FIGS. 2 to 5C, the housing 310 of FIGS. 7A to 7B, and the housing 310 of FIGS. 11A to 11B. Therefore, no duplicate description is given.

According to an embodiment, the housing 310 may include a conductive member 1370 (e.g., the conductive member 530 of FIG. 5C, the conductive member 770 of FIG. 7A/B, or the conductive member 1170 of FIG. 11A/B) as a part of the housing 310. The description of the conductive member 1370 may refer to the description of the conductive member 530 of FIG. 5C, the conductive member 770 of FIG. 7A/B, or the conductive member 1170 of FIG. 11A/B.

According to an embodiment, the conductive member 1370 may be segmented (or divided) into the first conductive member 1371 and the second conductive member 1372 by the segmented portion 1390. According to an embodiment, the segmented portion 1390 may be positioned between the first conductive member 1371 and the second conductive member 1372. In the disclosure, the segmented portion 1390 may be referred to as a non-conductive segmented portion. In the disclosure, the first conductive member 1371 may be referred to as a first segment, and the second conductive member 1372 may be referred to as a second segment.

According to an embodiment, the conductive member 1370 may form a portion of a first side surface (e.g., an upper side surface) of the electronic device 101. The conductive member 1370 may include a first segment 1371 and a second segment 1372 formed in a first direction and a second direction opposite to each other with respect to the non-conductive segmented portion 1390 forming another portion of the first side surface.

According to an embodiment, the segmented portion 1390 may be filled with a dielectric. The dielectric may be, e.g., air, plastic, ceramic, glass, or other dielectric. In the disclosure, the segmented portion 1390 may be referred to as a gap or a gap portion.

According to an embodiment, the NFC antenna 1310 may be a 3D antenna.

According to an embodiment, the NFC antenna 1310 may be an LDS antenna formed (or provided) on the support plate 1350.

According to an embodiment, the NFC antenna 1310 may include a plurality of loop portions 1320 connected to each other. According to an embodiment, each loop portion may substantially form a corresponding loop. According to an embodiment, one loop may correspond to one turn.

According to an embodiment, the plurality of loop portions 1320 may include at least one first loop portion 1330 and/or at least one second loop portion 1340.

According to an embodiment, the at least one first loop portion 1330 may include an innermost loop portion 1331 among the plurality of loop portions 1320, and/or a loop portion 1132 disposed outside the loop portion 1331. The description of the loop portion 1331 and the loop portion 1132 included in the at least one first loop portion 1330 and the at least one first loop portion 1330 itself is equivalent to the description of these features in relation to FIGS. 7A to 9. Therefore, no duplicate description is given. Meanwhile, unlike that illustrated in FIG. 13, the number of the at least one first loop portion 1330 may be the same as, e.g., the number of the at least one first loop portion 730 of FIGS. 7A to 9. Accordingly, substantially the same performance in the rear direction may be guaranteed.

According to an embodiment, the loops of the at least one second loop portion 1340 may include outermost loop portion 1342 disposed at the outermost of the plurality of loop portions 1320 and a loop portion 1341 disposed inside the outermost loop 1342. The description of the outermost loop portion 1342 may include, e.g., the description of the second loop portion 740 of FIGS. 7A to 9 or the second loop portion 1140 of FIGS. 11A to 12.

According to an embodiment, the loop portion 1341 may form a loop substantially different in shape and/or position from the outermost loop portion 1342 and the at least one first loop portion 1330.

According to an embodiment, the loop portion 1341 may include at least one portion disposed inside the first area 1360 (or the first loop portion 1330) and at least one protruding portion 1380 disposed outside the first area 1360. According to an embodiment, the at least one protruding portion 1380 disposed outside the first area 1360 (or the first loop portion 1330) may include a first protruding portion 1381, a second protruding portion 1382, and/or a third protruding portion 1383.

According to an embodiment, the first protruding portion 1381 may protrude toward the first segment 1371 with respect to the first loop portion 1330. The first protruding portion 1381 may extend to have at least a first end portion adjacent to the first segment 1371 of the conductive member 1370. The first end portion adjacent to the first segment 1371 of the conductive member 1370 may include, e.g., an edge adjacent to the first segment 1371 of the conductive member 1370 and/or a portion adjacent to the edge.

According to an embodiment, the second protruding portion 1382 may protrude toward the second segment 1372 with respect to the first loop portion 1330. The second protruding portion 1382 may extend to have at least a second end portion adjacent to the second segment 1371 of the conductive member 1370. The second end portion adjacent to the second segment 1372 of the conductive member 1370 may include, e.g., an edge adjacent to the second segment 1372 of the conductive member 1370 and/or a portion adjacent to the edge.

According to an embodiment, the third protruding portion 1383 may extend between the first end portion and the second end portion so that the first protruding portion 1381 and the second protruding portion 1382 are connected through the third protruding portion 1383. According to an embodiment, when the third protruding portion 1180c is connected to the current source, the third protruding portion 1180c may be configured to generate a magnetic field in at least a first side direction (e.g., an upper side direction).

According to an embodiment, when viewed from the first side surface (e.g., the upper side surface), the third protruding portion 1383 may overlap the non-conductive segmented portion 1390, at least a portion of the first segment 1371, and at least a portion of the second segment 1372.

According to an embodiment, the first protruding portion 1381 and the second protruding portion 1382 may be formed on the first side (e.g., surface) of the support plate 1350, and the third protruding portion 1383 may be formed on the second side (e.g., surface) opposite to the first side (e.g., surface) of the support plate 1350.

According to an embodiment, the first loop portion 1330 may include a plurality of loop portions (1331 and 1332), and a distance between the third protruding portion 1383 and the outermost loop portion 1332 of the plurality of loop portions 1331 and 1332 of the first loop portion 1330 may be longer than a distance between two adjacent loop portions of the plurality of loop portions (1331 and 1332). According to an embodiment, each of the first protruding portion 1381 and the second protruding portion 1382 may extend from the first area 1360 (e.g., a point in the first area 1360) on a first plane (e.g., the first plane 751 of FIG. 8 or the first plane 751 of FIG. 12) of the support plate 1350 toward the conductive member 1370. For example, the first protruding portion 1381 may extend to a position closer to the first conductive member 1371, and the second protruding portion 1382 may extend to a position closer to the second conductive member 1372. For example, the first protruding portion 1381 may extend to a position closest to the first conductive member 1371 on the first plane of the support plate 1350, and the second protruding portion 1382 may extend to a position closest to the second conductive member 1372 on the first plane of the support plate 1350.

According to an embodiment, as illustrated in FIG. 13, the first protruding portion 1381 and the second protruding portion 1382 may be disposed parallel to each other when viewed from above (i.e., when viewed from the rear) but are not limited thereto.

According to an embodiment, the first conductive member 1371 may form a first antenna (e.g., a first metal antenna), and the second conductive member 1372 may form a second antenna (e.g., a second metal antenna).

According to an embodiment, the third protruding portion 1383 may extend from the first protruding portion 1381 (e.g., one end or one point of the first protruding portion 1381) on the first plane to the second protruding portion 1382 (e.g., one end or one point of the second protruding portion 1382) on the first plane. The description of the third protruding portion 1383 may refer to the description of the third protruding portion 780c of FIGS. 7A to 9. Therefore, no duplicate description is given.

According to an embodiment, the third protruding portion 1383 may include a segmented portion 1390 of the conductive member 1370.

According to an embodiment, when viewed from the side (e.g., when viewed from the upper side), a portion of the third protruding portion 1383 may overlap the segmented portion 1390 of the conductive member 1370.

According to an embodiment, when viewed from a side (e.g., when viewed from an upper side), a portion of the third protruding portion 1383 may be disposed to pass through the segmented portion 1390 of the conductive member 1370.

According to an embodiment, when viewed from above (e.g., when viewed from the rear), a portion of the third protruding portion 1383 may be disposed adjacent to and parallel to the segmented portion 1390 of the conductive member 1370.

According to an embodiment, when viewed from above (e.g., when viewed from the rear), a portion of the third protruding portion 1383 may be spaced apart from and disposed parallel to the segmented portion 1390 of the conductive member 1370.

According to an embodiment, the third protruding portion 1383 may pass through a plane that is perpendicular to the support plate 1350 and that passes through the segmented portion 1390 of the conductive member 1370.

According to an embodiment, as illustrated in FIG. 13, the length of the third protruding portion 1383 may be longer than the length l₂ (or width) of the segmented portion 1390. For example, when viewed from a side, a length of the third protruding portion 1383 may be longer than a length of a portion where the third protruding portion 1383 and the segmented portion 1390 overlap each other. In this case, the length of the segmented portion 1390 is the length of a portion where the third protruding portion 1383 and the segmented portion 1390 overlap each other.

According to an embodiment, as illustrated in FIG. 13, the length of the third protruding portion 1383 may be shorter than the length l₁ of the third protruding portion of the outermost loop 1342 (e.g., the length of the third protruding portion 787 of FIGS. 7A to 7B or the length of the seventh portion 1187 of FIGS. 11A to 11B).

According to an embodiment, when viewed from above (e.g., when viewed from the rear), the third protruding portion 1383 may be disposed adjacent to and parallel to the third portion of the outermost loop 1342.

According to an embodiment, when viewed from above (e.g., when viewed from the rear), the third protruding portion 1383 may be spaced apart from and disposed parallel to the third portion of the outermost loop 1342.

when there are a plurality of second loops (or second loop portions) that generate a magnetic field in the upper side direction, the NFC antenna 1110 can generate a magnetic field having a higher intensity in the upper side direction than when a single second loop is present. In this way, NFC performance in the upper side direction can be increased.

Meanwhile, as described above, the NFC antenna 1310 of FIG. 13 may be substantially the same as the NFC antenna 710 of FIGS. 7A to 9 or the NFC antenna 1110 of FIGS. 11A to 12, except that a plurality of second loops (or second loop portions) are included to generate the magnetic field in the upper direction. Accordingly, the NFC performance in the upper direction of the NFC antenna 1310 may be relatively higher than the NFC performance in the upper direction of the NFC antenna 710 or the NFC antenna 1110. However, the NFC antenna 1310 may have a larger space occupied by the NFC antenna on the support plate than the NFC antenna 710 or the NFC antenna 1110.

In other examples, like the outermost loop portion 1342, the loop portion 1341 may extend from the first plane of the support plate 1350 to a third plane (e.g., the third plane 753 of FIGS. 7A to 9 or the third plane 1153 of FIGS. 7A to 9) opposite to the first plane. The description of the extension of the loop portion 1341 from the first plane to the third plane includes the description of the extension of the second loop portion 740; 1140 from the first plane to the third plane described above with reference to FIGS. 7A to 9 or 11A to 12. Therefore, no duplicate description is given.

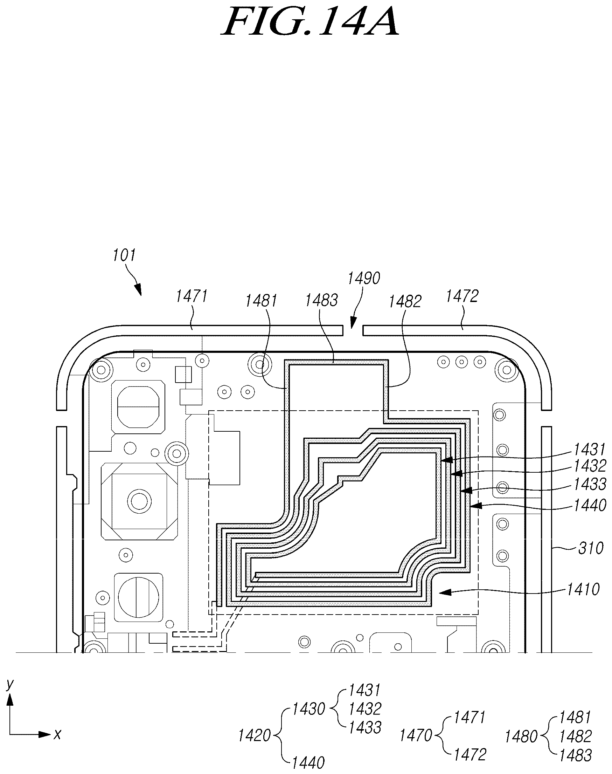

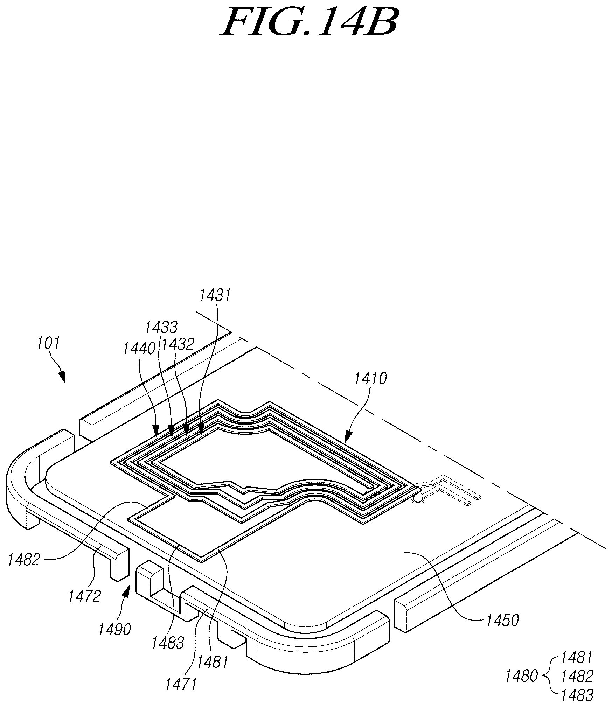

FIG. 14A is a view illustrating a configuration of an NFC antenna according to an embodiment of the disclosure. FIG. 14B is a view illustrating the configuration of the NFC antenna of FIG. 14A.

FIG. 14A illustrates the NFC antenna configuration when viewed from above (e.g., the rear side). FIG. 14B illustrates the NFC antenna configuration when viewed from an upper side.

The NFC antenna configurations of the embodiments of FIGS. 14A and 14B may be substantially the same as those of the NFC antenna configurations of FIGS. 7A to 9 (or FIGS. 11A to 12, or 13), except that in FIGS. 14A and 14B, the entire NFC antenna is configured in two dimensions on the first plane.

In the embodiments of FIGS. 14A and 14B, for convenience of description, an NFC antenna is described which is an example of a loop antenna, but the description of the present embodiment may be applied to different types of loop antennas other than the NFC antenna in the same or similar manner.

Referring to FIGS. 14A and 14B, the electronic device 101 may include a housing 310 and an NFC antenna 1410 disposed in the housing 310. The description of the housing 310 includes the description of the housing 310 of FIGS. 2 to 5C and the housing 310 of FIGS. 7A and 7B (or FIGS. 11A to 12 or FIG. 13). Therefore, no duplicate description is given.

According to an embodiment, the conductive member 1470 may be segmented (or divided) into the first conductive member 1471 and the second conductive member 1472 by the segmented portion 1490. According to an embodiment, the segmented portion 1490 may be positioned between the first conductive member 1471 and the second conductive member 1472. In the disclosure, the segmented portion 1490 may be referred to as a non-conductive segmented portion. In the disclosure, the first conductive member 1471 may be referred to as a first segment, and the second conductive member 1472 may be referred to as a second segment.

According to an embodiment, the conductive member 1470 may form a portion of a first side surface (e.g., an upper side surface) of the electronic device 101. The conductive member 1470 may include a first segment 1471 and a second segment 1472 formed in a first direction and a second direction opposite to each other with respect to the non-conductive segmented portion 1490 forming another portion of the first side surface.

According to an embodiment, the NFC antenna 1410 may be a two-dimensional antenna.

According to an embodiment, the NFC antenna 1410 may be an LDS antenna formed on a first plane (e.g., the first plane 751 of FIG. 7A or the first plane 1151 of FIG. 11A) of a support plate (e.g., the support plate 750 of FIG. 7A or the support plate 1150 of FIG. 11A).

According to an embodiment, the NFC antenna 1410 may include a plurality of loop portions connected to each other. According to an embodiment, each loop portion may substantially form a corresponding loop. According to an embodiment, one loop may correspond to one turn.

According to an embodiment, the plurality of loop portions 1420 may include at least one first loop portion 1430 and/or at least one second loop portion 1440. The at least one first loop portion 1430 may include an innermost loop portion 1431 among the plurality of loop portions 1420, a loop portion 1432 disposed outside the loop portion 1431, and/or a loop portion 1433 disposed outside the loop portion 1432. The description of the remaining loop portions included in the plurality of loop portions other than the second loop portion 1440 may refer to the description of FIGS. 7A to 13. Therefore, no duplicate description is given.

According to an embodiment, the second loop portion 1440 may be the outermost loop disposed at the outermost of the plurality of loops.

According to an embodiment, the second loop portion 1440 may include at least one portion disposed inside the first area (e.g., the first area 760 of FIG. 7A or the first area 1160 of FIG. 11A) (or the first loop portion 1430) and at least one protruding portion 1480 disposed outside the first area (or the first loop portion 1430).

According to an embodiment, the at least one protruding portion 1480 may include a first protruding portion 1481, a second protruding portion 1482, and/or a third protruding portion 1483.

According to an embodiment, the first protruding portion 1481 may protrude toward the first segment 1471 of the conductive member 1470 with respect to the first loop portion 1430. The first protruding portion 1481 may extend to at least a first end portion adjacent to the first segment 1471 of the support plate 1450. The first end portion adjacent to the first segment 1471 of the support plate 1450 may include, e.g., an edge adjacent to the first segment 1471 of the support plate 1450 and/or a portion adjacent to the edge.

According to an embodiment, the second protruding portion 1482 may protrude toward the second segment 1472 of the conductive member 1470 with respect to the first loop portion 1430. The second protruding portion 1482 may extend to at least a second end portion adjacent to the second segment 1472 of the support plate 1450. The second end portion adjacent to the second segment 1472 of the support plate 1450 may include, e.g., an edge adjacent to the second segment 1472 of the support plate 1450 and/or a portion adjacent to the edge.

According to an embodiment, the third protruding portion 1483 may extend between the first end portion and the second end portion so that the first protruding portion 1481 and the second protruding portion 1482 are connected through the third protruding portion 1483. According to an embodiment, when the third protruding portion 1483 is connected to the current source, the third protruding portion 1180c may be configured to generate a magnetic field in at least a first side direction (e.g., an upper direction).

According to an embodiment, when viewed from the first side surface (e.g., the upper side surface), the third protruding portion 1483 may overlap the non-conductive segmented portion 1490, at least a portion of the first segment 1471, and at least a portion of the second segment 1472.

According to an embodiment, the first protruding portion 1481, the second protruding portion 1482, and the third protruding portion 1483 may be formed on the first side of the support plate 750.

According to an embodiment, the first loop portion 1430 may include a plurality of loop portions (1431, 1432, and 1433), and a distance between the third protruding portion 1483 and the outermost loop portion 1433 of the plurality of loop portions (1431, 1432, and 1433) of the first loop portion 1430 may be longer than a distance between two adjacent loop portions of the plurality of loop portions (1431, 1432, and 1433).

According to an embodiment, each of the first protruding portion 1481 and the second protruding portion 1482 may extend from the first area (e.g., one point in the first area) on the first plane of the support plate 1450 toward the conductive member 1470. For example, the first protruding portion 1481 may extend to a position adjacent to the first conductive member 1471, and the second protruding portion 1482 may extend to a position adjacent to the second conductive member 1472. For example, the first protruding portion 1381 may extend to a position closest to the first conductive member 1471 on the first plane of the support plate 1450, and the second protruding portion 1482 may extend to a position closest to the second conductive member 1472 on the first plane of the support plate 1450.

According to an embodiment, as illustrated in FIG. 14A, the first protruding portion 1481 and the second protruding portion 1482 may be disposed parallel to each other when viewed from above (e.g., when viewed from the rear) but are not limited thereto.

According to an embodiment, the third protruding portion 1483 may extend (e.g., connect) from the first protruding portion 1481 (e.g., one end or one point of the first portion 1481) on the first plane to the second protruding portion 1482 (e.g., one end or one point of the second portion 1482) on the first plane. The description of the third protruding portion 1483 may refer to the description of the seventh portion 787 of FIGS. 7A to 9 or the third protruding portion 1180c of FIGS. 11A to 12. Therefore, no duplicate description is given.

According to an embodiment, the third protruding portion 1483 may include a segmented portion 1490 of the conductive member 1470.

According to an embodiment, when viewed from the side (e.g., when viewed from the upper side), a portion of the third protruding portion 1483 may overlap the segmented portion 1490 of the conductive member 1470.

According to an embodiment, when viewed from a side (e.g., when viewed from an upper side), a portion of the third protruding portion 1483 may be disposed to pass through the segmented portion 1490 of the conductive member 1470.

According to an embodiment, when viewed from above (e.g., when viewed from the rear), a portion of the third protruding portion 1483 may be disposed adjacent to and parallel to the segmented portion 1490 of the conductive member 1470.

According to an embodiment, when viewed from above (e.g., when viewed from the rear), a portion of the third protruding portion 1483 may be spaced apart from and disposed parallel to the segmented portion 1490 of the conductive member 1470.

According to an embodiment, the third protruding portion 1483 may pass through a plane that is perpendicular to the support plate 1450 and that passes through the segmented portion 1490 of the conductive member 1470.

According to an embodiment, as illustrated in FIG. 14A, the length of the third protruding portion 1483 may be longer than the length (or width) of the segmented portion 1490. For example, when viewed from a side, a length of the third protruding portion 1483 may be longer than a length of a portion where the third protruding portion 1483 and the segmented portion 1490 overlap each other.

The NFC antenna 1410 of FIGS. 14A and 14B differs from the NFC antenna 710 of FIGS. 7A to 9, the NFC antenna 1110 of FIGS. 11A to 12, or the NFC antenna 1310 of FIG. 13 in that the NFC antenna 1410 is configured in two dimensions. Accordingly, the NFC performance in the upper direction of the NFC antenna 1410 may be relatively lower than the NFC performance in the upper direction of the NFC antenna 710, the NFC antenna 1110, or the NFC antenna 1310, but the space occupied by the NFC antenna on the support plate may be saved.

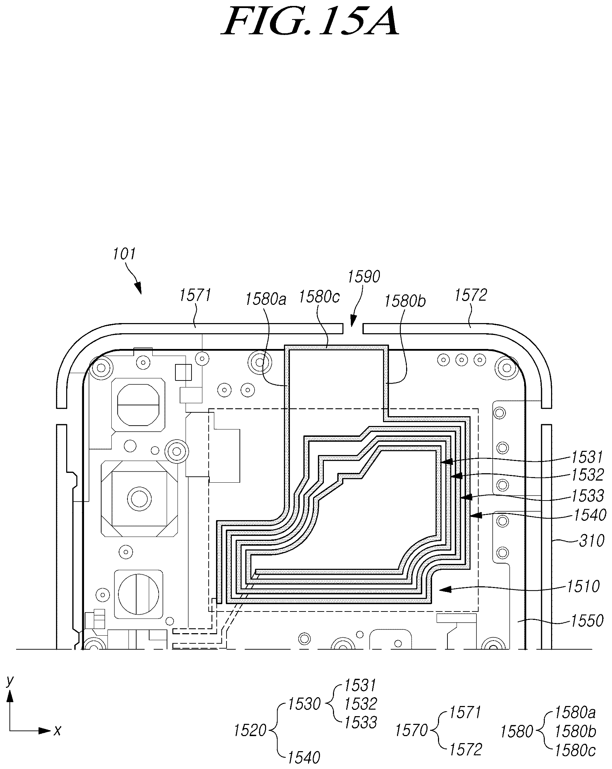

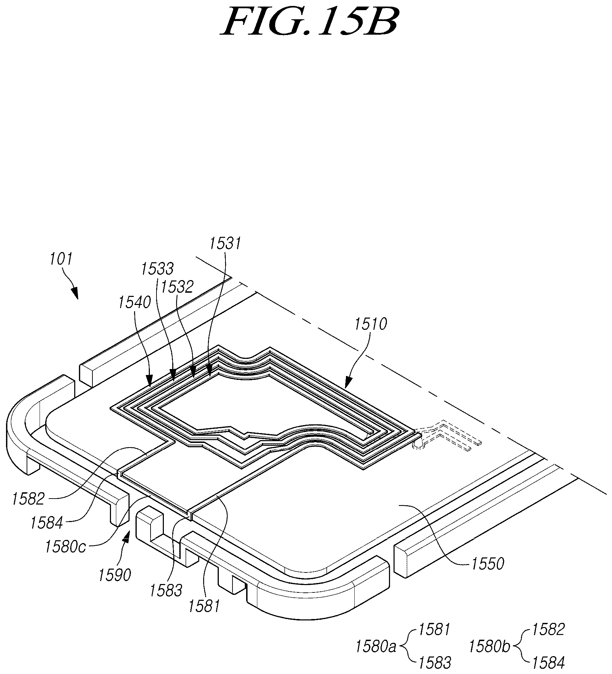

FIG. 15A is a view illustrating a configuration of an NFC antenna according to an embodiment of the disclosure. FIG. 15B is a view illustrating the configuration of the NFC antenna of FIG. 15B.

FIG. 15A illustrates, e.g., an NFC antenna configuration when viewed from above (e.g., the rear surface). FIG. 15B illustrates, e.g., an NFC antenna configuration when viewed from an upper side.

The NFC antenna configuration of the embodiments of FIGS. 15A to 15B may be substantially the same as the NFC antenna configuration of FIGS. 7A to 9 (or FIGS. 11A to 12, or 13), except that the loop extends only to a plane perpendicular to the first plane (outside) of the support plate. Thus, no duplicate description thereof is given.

In the embodiments of FIGS. 15A and 15B, for convenience of description, an NFC antenna is described as an example of a loop antenna, but the description of the present embodiment may be applied to other types of loop antennas other than the NFC antenna in the same or similar manner.

Referring to FIGS. 15A and 15B, the electronic device 101 may include a housing 310 and an NFC antenna 1510 disposed in the housing 310. The description of the housing 310 may refer to the description of the housing 310 of FIGS. 5A to 5C and the housing 310 of FIGS. 7A and 7B (or FIGS. 11A to 12 or FIG. 13). Therefore, no duplicate description is given.

According to an embodiment, the conductive member 1570 may be segmented (or divided) into the first conductive member 1571 and the second conductive member 1572 by the segmented portion 1590. According to an embodiment, the segmented portion 1590 may be positioned between the first conductive member 1571 and the second conductive member 1572. In the disclosure, the segmented portion 1590 may be referred to as a non-conductive segmented portion. In the disclosure, the first conductive member 1571 may be referred to as a first segment, and the second conductive member 1572 may be referred to as a second segment.

According to an embodiment, the conductive member 1570 may form a portion of a first side surface (e.g., an upper side surface) of the electronic device 101. The conductive member 1570 may include a first segment 1571 and a second segment 1572 formed in a first direction and a second direction opposite to each other with respect to the non-conductive segmented portion 1590 forming another portion of the first side surface.

According to an embodiment, the NFC antenna 1510 may be a 3D antenna.

According to an embodiment, the NFC antenna 1510 may be an LDS antenna formed on a first plane (e.g., the first plane 751 of FIG. 7A or the first plane 1151 of FIG. 11A) of a support plate (e.g., the support plate 750 of FIG. 7A or the support plate 1150 of FIG. 11A) and a second plane (e.g., the second plane 752 of FIG. 7A or the second plane 1152 of FIG. 11A) perpendicular to the first plane.

According to an embodiment, the NFC antenna 1410 may include a plurality of loop portions connected to each other. According to an embodiment, each loop portion may substantially form a corresponding loop. According to an embodiment, one loop may correspond to one turn.

According to an embodiment, the plurality of loop portions may include at least one first loop portion 1530 and at least one second loop portion 1540. The at least one first loop portion 1530 may include an innermost loop portion 1531 among the plurality of loop portions 1520, a loop portion 1532 disposed outside the loop portion 1531, and/or a loop portion 1533 disposed outside the loop portion 1532. The description of the remaining loop portions included in the plurality of loop portions other than the second loop portion 1540 may refer to the description of FIGS. 7A to 14B. Therefore, no duplicate description is given.

According to an embodiment, the second loop portion 1540 may be the outermost loop disposed at the outermost of the plurality of loop portions.

According to an embodiment, the second loop portion 1540 may include at least one portion disposed inside the first area (e.g., the first area 760 of FIG. 7A or the first area 1160 of FIG. 11A) (or the first loop portion 1530) and at least one protruding portion 1580 disposed outside the first area (or the first loop portion 1530).

According to an embodiment, the at least one protruding portion 1580 may include a first protruding portion 1580a, a second protruding portion 1580b, and/or a third protruding portion 1580c.

According to an embodiment, the first protruding portion 1580a may protrude toward the first segment 1571 of the conductive member 1570 with respect to the first loop portion 1530. The first protruding portion 1580a may extend to at least a first end portion adjacent to the first segment 1571 of the support plate 1550. The first end portion adjacent to the first segment 1571 of the support plate 1550 may include, e.g., an edge adjacent to the first segment 1571 of the support plate 1550 and/or a portion adjacent to the edge.

According to an embodiment, the second protruding portion 1580b may protrude toward the second segment 1572 of the conductive member 1570 with respect to the first loop portion 1530. The second protruding portion 1580b may extend to at least a second end portion adjacent to the second segment 1572 of the support plate 1550. The second end portion adjacent to the second segment 1572 of the support plate 1550 may include, e.g., an edge adjacent to the second segment 1572 of the support plate 1550 and/or a portion adjacent to the edge.

According to an embodiment, the third protruding portion 1580c may extend between the first end portion and the second end portion so that the first protruding portion 1580a and the second protruding portion 1580b are connected through the third protruding portion 1580c. According to an embodiment, when the third protruding portion 1580c is connected to the current source, the third protruding portion 1180c may be configured to generate a magnetic field in at least a first side direction (e.g., an upper direction).

According to an embodiment, when viewed from the first side surface (e.g., the upper side surface), the third protruding portion 1580c may overlap the non-conductive segmented portion 1590, at least a portion of the first segment 1571, and at least a portion of the second segment 1572.

According to an embodiment, the third protruding portion 1580c may be at least partially in contact with the lateral side of the support plate 1550. According to an embodiment, substantially the entire area of the third protruding portion 780c may be formed on the lateral side of the support plate 1550.

According to an embodiment, the first loop portion 1530 may include a plurality of loop portions (1531, 1532, and 1533), and a distance between the third protruding portion 1530c and the outermost loop portion 1533 of the plurality of loop portions (1531, 1532, and 1533) of the first loop portion 1530 may be longer than a distance between two (2) adjacent loop portions of the plurality of loop portions (1531, 1532, and 1533).

According to an embodiment, the first protruding portion 1580a may include a first portion 1581 and/or a third portion 1483. According to an embodiment, the second protruding portion 1580b may include a second portion 1582 and/or a fourth portion 1584. The description of the first portion 1581 and the second portion 1582 may refer to the description of the first portion 781 and the second portion 782 of FIGS. 7A to 9. Therefore, no duplicate description is given.

According to an embodiment, the third portion 1583 may extend from a first portion 1581 (e.g., one end or one point of the first portion 1581) on a first plane (e.g., the first plane 751 of FIG. 7A or the first plane 751 of FIG. 11A) of a support plate (e.g., the support plate 750 of FIG. 7A or the support plate 1150 of FIG. 11A) along a second plane (e.g., the second plane 752 of FIG. 7A) or a through-hole (e.g., the through-hole 1152 of FIG. 11A) perpendicular to the first plane.

According to an embodiment, the fourth portion 1584 may extend from the second portion 1582 (e.g., one end or one point of the second portion 1582) on the first plane of the support plate along the second plane or the through-hole perpendicular to the first plane.

According to an embodiment, the third protruding portion 1580c may extend from the third portion 1583 (e.g., one end or one point of the third portion 1583) on the second plane to the fourth portion 1584 (e.g., one end or one point of the fourth portion 1584) on the second plane. The description of the third protruding portion 1580c may refer to the description of the third protruding portion 780c of FIGS. 7A to 9 or the third protruding portion 1180c of FIGS. 11A to 12. Therefore, no duplicate description is given.

According to an embodiment, the third protruding portion 1580c may include a segmented portion of the conductive member.

According to an embodiment, when viewed from a side (e.g., when viewed from an upper side), a portion of the third protruding portion 1580c may overlap a segmented portion of the conductive member.

According to an embodiment, when viewed from a side (e.g., when viewed from an upper side), a portion of the third protruding portion 1580c may be disposed to pass through the segmented portion of the conductive member.

According to an embodiment, when viewed from above (e.g., when viewed from the rear), a portion of the third protruding portion 1580c may be disposed adjacent to and parallel to the segmented portion of the conductive member.

According to an embodiment, when viewed from above (e.g., when viewed from the rear), a portion of the third protruding portion 1580c may be spaced apart from and disposed parallel to the segmented portion of the conductive member.

According to an embodiment, the third protruding portion 1580c may pass through a plane that is perpendicular to the support plate and that passes through a segmented portion of the conductive member.

According to an embodiment, as illustrated in FIG. 15A, the length of the third protruding portion 1580c may be longer than the length of the segmented portion. For example, when viewed from the side, the length of the third protruding portion 1580c may be longer than the length of the portion where the third protruding portion 1580c and the segmented portion overlap each other.

The NFC antenna 1510 of FIGS. 15A and 15B differs from the NFC antenna 710 of FIGS.14A to 7A to 9, the NFC antenna 1110 of FIGS. 11A to 12, the NFC antenna 1310 of FIG. 13, or the NFC antenna 1410 of FIG. 14A in that the NFC antenna 1510 extends only to the second plane perpendicular to the first plane (outside) of the support plate. Accordingly, the NFC performance in the upper direction of the NFC antenna 1510 may be relatively lower than the NFC performance in the upper direction of the NFC antenna 710, the NFC antenna 1110, or the NFC antenna 1310, but the space occupied by the NFC antenna on the support plate may be saved. Further, the NFC performance in the upper direction of the NFC antenna 1510 may be relatively higher than the NFC performance in the upper direction of the NFC antenna 1410, but the space occupied by the NFC antenna on the support plate may increase.

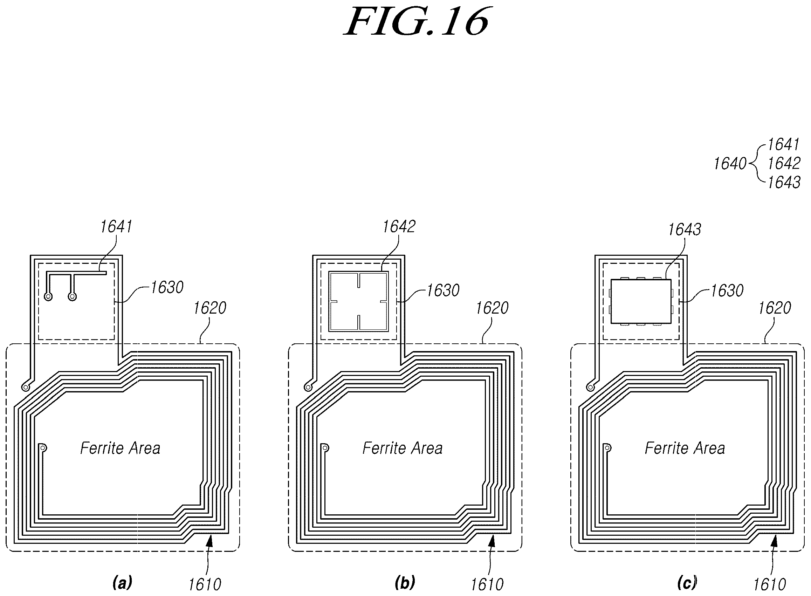

FIG. 16 is a view illustrating a configuration of an NFC antenna including an additional electric component according to an embodiment of the disclosure.

Referring to FIG. 16, the NFC antenna 1610 may include a plurality of loops. The NFC antenna may be the NFC antenna 710 of FIG. 7A, the NFC antenna 1110 of FIG. 11A, the NFC antenna 1310 of FIG. 13, the NFC antenna 1410 of FIG. 14A, or the NFC antenna 1510 of FIG. 15A.

According to an embodiment, one loop (e.g., the outermost loop) of the plurality of loops of the NFC antenna 1610 may have a portion included in the first area 1620 and a portion included outside the first area 1620. According to an embodiment, the portion of the loop included outside the first area may define a second area 1630.

According to an embodiment, at least a portion of the first area 1620 may be a ferrite area.

According to an embodiment, the second area 1630 may include at least one additional electric component 1640 (e.g., an antenna). For example, as illustrated in part (a) of FIG. 16, the second area 1630 may include a PIFA 1641. For example, as illustrated in part (b) of FIG. 16, the second area 1630 may include a patch antenna 1642. For example, as illustrated in part (c) of FIG. 16, the second area 1630 may include other electric components 1643. In this way, by including the additional component (e.g., antenna) within the second area, the unused space created by the protruded second loop portion can be efficiently utilized.

Meanwhile, various embodiments of the NFC antenna configuration described above with reference to FIGS. 5A to 16 may be used in combination unless they contradict each other. For example, like the NFC antenna 1310 of FIG. 13, the NFC antenna 1410 of FIG. 14A and the NFC antenna 1510 of FIG. 15A may further include one or more additional second loop portions in the outermost loop portion. According to an embodiment, the electronic device 101 may comprise a housing 310 including a conductive member (770; 1170; 1370; 1470; 1570) forming a portion of a first side surface (or, a first lateral surface)) of the electronic device. The conductive member may include a first segment (771;1171;1371;1471;1571) and a second segment (772;1172;1372;1472;1572) respectively formed in first and second directions opposite to each other with respect to a non-conductive segmented portion (790;1190;1390;1490;1590) forming another portion of the first side surface.

According to an embodiment, the electronic device 101 may comprise a printed circuit board 340 disposed in the housing 310 and a support plate (750;1150;1350;1450;1550) disposed adjacent to a rear side (e.g., surface) of the housing 310 and having (or provided with) a loop antenna (710;1110;1310;1410;1510).

According to an embodiment, the loop antenna may include a first loop portion (730;1130;1330;1430;1530) substantially forming a loop, and a second loop portion (740;1140;1340;1440;1540) substantially forming another loop.

According to an embodiment, the second loop portion may include a first protruding portion (780a;1180a;1381;1481;1580a), a second protruding portion (780b;1180b;1382;1482;1580b), and a third protruding portion (780c;1180c;1383;1483;1580c) positioned outside the first loop portion.

According to an embodiment, the first protruding portion may protrude toward the first segment with respect to the first loop portion and may extend to at least a first end portion of the support plate adjacent to the first segment.

According to an embodiment, the second protruding portion may protrude toward the second segment with respect to the first loop portion and may extend to at least a second end portion of the support plate adjacent to the second segment.

According to an embodiment, the third protruding portion may extend between the first end portion and the second end portion so that the first protruding portion and the second protruding portion are connected through the third protruding portion.

According to an embodiment, when viewed from the first side surface, the third protruding portion may overlap the non-conductive segmented portion, at least a portion of the first segment, and at least a portion of the second segment.

According to an embodiment, the third protruding portion may be at least partially in contact with a lateral side (e.g., surface) of the support plate.

According to an embodiment, a substantially entire portion of the third protruding portion may be formed on a lateral side (e.g., surface) of the support plate.

According to an embodiment, the first protruding portion and the second protruding portion may be formed on a first side (e.g., surface) of the support plate, and the third protruding portion may be formed on a second side (e.g., surface) opposite to the first side (e.g., surface) of the support plate.

According to an embodiment, the first protruding portion may extend to the second side (e.g., surface) along a first through-hole formed at the first end portion, and the second protruding portion may extend to the second side (e.g., surface) along a second through-hole formed at the second end portion.

According to an embodiment, the third protruding portion may be configured to generate a magnetic field at least in the first side surface direction.

According to an embodiment, the second loop portion may be disposed at an outermost of a plurality of loop portions including the first loop portion and the second loop portion and forming the loop antenna.

According to an embodiment, the loop antenna may further include a third loop portion forming a loop substantially different from the first loop portion and the second loop portion. The third loop portion may include a fourth protrusion 1381, a fifth protrusion 1382, and a sixth protrusion 1383 positioned between the first loop portion and the second loop portion. The fourth protrusion may protrude (e.g., extend) toward the first segment with respect to the first loop portion and may extend to at least a third end portion of the support plate adjacent to the first segment. The fifth protruding portion may protrude toward the second segment with respect to the first loop portion and may extend to at least a fourth end portion of the support plate adjacent to the second segment. The sixth protruding portion may extend between the third end portion and the fourth end portion so that the fourth protruding portion and the fifth protruding portion are connected through the sixth protruding portion.

According to an embodiment, the first loop portion may include a plurality of loop portions, and a distance between the sixth protruding portion and an outermost loop among the plurality of loop portions may be longer than a distance formed between loop portions adjacent to each other among the plurality of loop portions.

According to an embodiment, the electronic device may further include an additional antenna (1641;1642) formed between the first protruding portion and the second protruding portion.

According to an embodiment, the loop antenna may form a NFC antenna, and the additional antenna may form a PIFA or a patch antenna.

According to an embodiment, the first loop portion may include a plurality of loop portions, and a distance between the third protruding portion and an outermost loop portion among the plurality of loop portions may be longer than a distance between two adjacent loop portions among the plurality of loop portions.

According to an embodiment, the electronic device 101 may comprise a housing 310 including a conductive member (770; 1170; 1370; 1470; 1570) forming a portion of a first side surface (or, a first lateral surface) of the electronic device. The conductive member may include a first segment (771;1171;1371;1471;1571) and a second segment (772;1172;1372;1472;1572) respectively formed in first and second directions opposite to each other with respect to a non-conductive segmented portion (790;1190;1390;1490;1590) forming another portion of the lateral side (e.g., surface).

According to an embodiment, the electronic device 101 may comprise a PCB 340 disposed in the housing 310 and a support plate (750;1150;1350;1450;1550) disposed adjacent to a rear side (e.g., surface) of the housing 310 and including a loop antenna (710;1110;1310;1410;1510).

According to an embodiment, the loop antenna may include a first loop portion (730;1130;1330;1430;1530) substantially forming a loop, and a second loop portion (740;1140;1340;1440;1540) substantially forming another loop, and the second loop portion may include a first protruding portion (780a;1180a;1381;1481;1580a), a second protruding portion (780b;1180b;1382;1482;1580b), and a third protruding portion (780c;1180c;1383;1483;1580c) disposed outside the first loop portion.

According to an embodiment, at least a portion of the first protruding portion or at least a portion of the second protruding portion may protrude toward the first side surface with respect to the first loop portion.

According to an embodiment, the first protruding portion may extend to at least a first end portion adjacent to the first segment of the support plate.

According to an embodiment, the second protruding portion may extend to at least a second end portion of the support plate adjacent to the second segment.

According to an embodiment, the third protruding portion may extend between the first end portion and the second end portion so that the first protruding portion and the second protruding portion are connected through the third protruding portion.

According to an embodiment, the first loop portion may include a plurality of loop portions, and a distance between the third protruding portion and an outermost loop portion among the plurality of loop portions may be longer than a distance between two adjacent loop portions among the plurality of loop portions.

According to an embodiment, when viewed from the first side surface, the third protruding portion may overlap the non-conductive segmented portion, at least a portion of the first segment, and at least a portion of the second segment.

According to an embodiment, the first protruding portion and the second protruding portion may be formed on a first surface of the support plate, and the third protruding portion may be formed on a second surface different from the first surface of the support plate.

According to an embodiment, the first protruding portion may extend to the second surface along a first through hole formed at the first end portion, and the second protruding portion may extend to the second surface along a second through-hole formed at the second end portion.

According to an embodiment, the electronic device may further include an additional antenna formed between the first protruding portion and the second protruding portion. According to an embodiment, the electronic device 101 may comprise a housing 310 including a first conductive member (771;1171;1371;1471;1571) and a second conductive member (772;1172;1372;1472;1572) forming portions of an exterior side wall. The electronic device 101 may comprise a printed circuit board 340 disposed in the housing 310. The electronic device 101 may comprise a support plate 750;1150;1350;1450;1550 disposed in the housing 310. The electronic device 101 may comprise a near field communication (NFC) antenna provided on the support plate. The NFC antenna may include a first loop portion (730;1130;1330;1430;1530) disposed on the support plate and a second loop portion (740;1140;1340;1440;1540). The first loop portion may be configured to radiate a signal in a direction passing through a rear surface of the electronic device, and the second loop portion may be configured to radiate a signal in a direction passing through the exterior side wall between the first conductive member and the second conductive member.

According to an embodiment, the second loop portion may be at least partially disposed on a side edge of the support plate.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

## Claims

1. An electronic device (101), comprising:
a housing (310) including a first conductive member (771) and a second conductive member (772) forming portions of an exterior side wall of the electronic device;
a loop antenna disposed in the housing, the loop antenna including a first loop portion (730) and a second loop portion (740);
an integrated circuit, IC, disposed in the housing, for driving the loop antenna, and
wherein the first loop portion is configured to radiate a signal in a direction through a rear side of the electronic device, and the second loop portion is configured to radiate a signal in a direction through the exterior side wall between the first conductive member and the second conductive member.

2. The electronic device of claim 1,
wherein the first loop portion is in a plane parallel to the rear side of the electronic device.

3. The electronic device of claim 1 or claim 2,
wherein the second loop portion is between the exterior side wall and the first loop portion.

4. The electronic device of any one of claims 1 to 3,
wherein the second loop portion is in a plane parallel to the exterior side wall of the electronic device.

5. The electronic device of any one of claims 1 to 4,
wherein the first conductive member and the second conductive member are separated by a non-conductive segment portion (790);
wherein when viewed from the first side surface, the second loop portion overlaps at least a portion of the non-conductive segment portion.

6. The electronic device (101) of any one of claims 1 to 5, further comprising:
a support plate (750;1150;1350;1450;1550) disposed adjacent to a rear of the housing (310) and wherein the loop antenna is disposed on the support plate,
wherein the second loop portion includes a first protruding portion (780a;), a second protruding portion (780b), and a third protruding portion (780c),
wherein the first protruding portion protrudes toward the first segment with respect to the first loop portion and extends to at least a first end portion,
wherein the second protruding portion protrudes toward the second segment with respect to the first loop portion and extends to at least a second end portion, and
wherein the third protruding portion extends between the first end portion and the second end portion such that the first protruding portion and the second protruding portion are connected through the third protruding portion.

7. The electronic device of any one of claims 1 to 6,
wherein the third protruding portion is configured to generate a magnetic field at least in a direction of the first side.

8. The electronic device of claim 6 or claim 7,
wherein the first protruding portion and the second protruding portion are formed on a first side of the support plate, and the third protruding portion is formed on a second side of the support plate opposite to the first side.

9. The electronic device of claim 8,
wherein the third protruding portion is at least partially in contact with a side of the support plate.

10. The electronic device of claim 8,
wherein the first protruding portion extends to the second side along a first through-hole formed in the support plate, and the second protruding portion extends to the second side along a second through-hole formed in the support plate.

11. The electronic device of any one of claims 1 to 10,
wherein the loop antenna further includes a third loop portion forming a loop substantially different from the first loop portion and the second loop portion,

12. The electronic device of claim 11,
wherein the third loop portion includes a fourth protruding portion (1381), a fifth protruding portion (1382), and a sixth protruding portion (1383) positioned between the first loop portion and the second loop portion,
wherein the fourth protruding portion protrudes toward the first segment with respect to the first loop portion and extends to at least a third end portion of the support plate adjacent to the first segment,
wherein the fifth protruding portion protrudes toward the second segment with respect to the first loop portion and extends to at least a fourth end portion of the support plate adjacent to the second segment, and
wherein the sixth protruding portion extends between the third end portion and the fourth end portion so that the fourth protruding portion and the fifth protruding portion are connected through the sixth protruding portion.

13. The electronic device of any one of claims 1 to 12,
wherein the second loop portion is disposed at an outermost of a plurality of loop portions including the first loop portion and the second loop portion and forming the loop antenna.

14. The electronic device of claim 11,
wherein the loop antenna forms a near field communication (NFC) antenna.

15. The electronic device of any one of claims 1 to 14, further comprising
an additional antenna (1641;1642) formed between the first protruding portion and the second protruding portion, and
wherein the additional antenna forms a planar inverted f antenna (PIFA) or a patch antenna.
